# EUROPEAN PATENT SPECIFICATION

(11) **EP 4 110 676 B1**
(45) Date of publication and mention of the grant of the patent: **03.09.2025**
(21) Application number: 21710203.7
(22) Date of filing: 01.03.2021
(51) Int. Cl.: B62B 7/06, B62B 7/08

(54) **SYNCHRONOUS UNLOCKING MECHANISM AND STROLLER**
SYNCHRONE ENTRIEGELUNGSVORRICHTUNG UND KINDERWAGEN
MÉCANISME DE DÉVERROUILLAGE SYNCHRONE ET POUSSETTE

(30) Priority: 28.02.2020 CN 202010129450
(43) Date of publication of application: 04.01.2023
(73) Proprietor: Wonderland Switzerland AG, 6312 Steinhausen (CH)
(72) Inventor: ZHONG, Zhiren, 6312 Steinhausen (CH)
(74) Representative: Lucke, Andreas
(86) International application number: PCT/EP2021/055083
(87) International publication number: WO 2021/170884

(56) References cited:
- CN-U- 206 885 123
- DE-A1- 102016 217 382
- US-B2- 9 540 028

## Description

### TECHNICAL FIELD

The present invention relates to a stroller, and in particular to a stroller having a synchronous unlocking mechanism which can synchronously unlock locking states of a seat and a stroller frame.

### BACKGROUND

The stroller is a very common baby product for parents to safely and steadily carry their baby on indoor and outdoor roads and provide care to the baby at the same time. Generally, a stroller includes a seat for an infant or a kid to sit thereon and a stroller frame for carrying the seat, and is designed to be lockable and foldable, such that when the stroller is in use, the seat and the stroller frame are locked in a unfolded state, and the seat and the stroller frame are both folded to reduce the occupied space when the use is done. However, currently, in the most strollers, a seat and a stroller are locked and unlocked through different locking mechanisms, and users need to operate each of the locking mechanisms to unlock the seat and the stroller frame, which is inconvenient to users. In addition, the multiple locking mechanisms in a stroller are complicated and easily damaged.
US 9,540,028 B2 discloses an infant stroller apparatus that includes a first and a second leg segment, a handle segment and a backrest frame. The first and second leg segments are respectively affixed with a first and a second coupling member that are connected with each other. The handle segment is affixed with a third coupling member that is connected with the first coupling member. The backrest frame is connected with the second leg segment. A latch assembled with the second coupling member is movable to engage with the third coupling member to lock the handle segment and the first and second leg segments in an unfolded state. A release actuator operatively connected with the latch is pivotally connected with the second leg segment adjacent to the pivot axis of the backrest frame. The release actuator is rotatable to cause the latch to disengage from the third coupling member for allowing folding of the infant stroller apparatus.
DE 10 2016 217 382 A1 and CN 206885123 U also disclose collapsible strollers.

### SUMMARY

The present invention discloses a stroller having a synchronous unlocking mechanism, which can synchronously unlock locking states of a seat and a stroller frame, thereby saving the user's unlocking steps and time and simplifying the mechanism.

The present invention provides a stroller comprising a seat, a stroller frame and a synchronous unlocking mechanism, configured on the seat and the stroller frame, in which the seat includes a seat frame, a backrest and a shaft, the seat frame is pivotally connected to the backrest through the shaft, and the stroller frame includes a fixing member for selectively locking the stroller frame. The synchronous unlocking mechanism includes a grip, a locking member, an elastic member and a towing member, wherein the grip is pivotally connected to the seat frame and/or the backrest; the locking member is slidably disposed on the shaft, the seat frame and the backrest along an axial direction of the shaft and is coupled to the grip; the elastic member is configured between the locking member and the seat frame or between the locking member and the backrest; and the towing member is connected to the grip and the fixing member.

In one embodiment, the locking member comprises a main body and an extending arm, wherein the main body is configured between the seat frame and the backrest, and the extending arm is connected to the main body and passes through the grip and the seat frame along the axial direction. The grip is formed with a through hole, at least one abutting portion is formed on the through hole, the abutting portion comprises a driving surface, the extending arm comprises a driven surface, and the driving surface and the driven surface are inclined with respect to the axial direction and abut against each other.

In one embodiment, there are multiple extending arms, these extending arms are symmetrically arranged with respect to the main body, and a protrusion is formed on one end of each of the plurality of extending arms away from the main body.

In one embodiment, the synchronous unlocking mechanism further comprises an operating member, a driving member, an abutting member and a connecting member, wherein the operating member is configured on the backrest, the driving member and the abutting member are slidably disposed on the backrest along a radial direction of the shaft, and the connecting member is connected to the operating member and the driving member.

In one embodiment, the driving member comprises a driving surface, the abutting member comprises a driven surface, and the driving surface of the driving member and the driven surface of the abutting member are inclined with respect to the axial direction and abut against each other.

In one embodiment, the grip comprises a guiding rail and a slider, a distance between the guiding rail and the shaft is in a gradational relationship, the slider is slidably disposed on the guiding rail, and the towing member is connected to the grip through the slider.

In one embodiment, the seat is configured on the stroller frame.

In one embodiment, the stroller frame further comprises a handle, a joint, a front leg and a rear leg. One end of the handle is pivotally connected to the rear leg and is hanged with the front leg through the joint, at least one part of the fixing member is configured in the joint, and a pivotal connection of the handle and the rear leg is located above the joint.

In one embodiment, the stroller frame further comprises a link, the link is pivotally connected to the front leg and the rear leg, and a pivotal connection between the front leg and the link is located below the joint.

In one embodiment, the stroller frame further comprises a supporting member, the supporting member is configured on the link, and the seat frame is slidably disposed on the supporting member.

In one embodiment, the backrest comprises a stud, one end of the rear leg is formed with a groove thereon, and the stub is configured in the groove.

In one embodiment, the seat frame is formed with a recess, and at least one part of the grip is accommodated in the recess.

In one embodiment, the seat frame comprises a restricting portion, and the restricting portion is configured in the recess and selectively abuts against the grip.

In one embodiment, the seat frame and the backrest respectively comprise a locking portion, and the locking portion and the locking member match each other.

In one embodiment, the seat frame is formed with a wire-aligning portion, the wire-aligning portion is configured at an outer side of the guiding rail with respect to the shaft, and the towing member passes through the wire-aligning portion.

Therefore, in the synchronous unlocking mechanism and the stroller of the present invention, the locking member is driven by the grip so as to slide between the seat frame and the backrest, thereby locking or unlocking the seat and the backrest, and the fixing member is driven by the grip through the towing member so as to synchronously unlock the stroller frame. Accordingly, the present invention saves the user's time to unlock different components of the stroller, and also simplify the mechanism to reduce the probability of failure of the stroller.

In order to make the above-mentioned features and advantages of the present invention easier to understand, the following specific embodiments are described in detail in conjunction with the accompanying drawings.

### BRIEF DESCRIPTION OF THE DRAWINGS

FIG. 1 is a perspective schematic view of an unfolded state of a stroller according to an embodiment of the present invention.
FIG. 2 is a perspective schematic view of the stroller of FIG. 1 from another angle.
FIG. 3 is a perspective schematic view of the stroller of FIG. 1 from another angle.
FIG. 4 is an enlarged schematic diagram of an area A in FIG. 3.
FIG. 5 is an enlarged schematic diagram of an area B in FIG. 3.
FIG. 6 is a perspective schematic view showing the assembly of the seat and the synchronous unlocking mechanism in FIG. 1.
FIG. 7 is a perspective schematic view showing the assembly of FIG. 6 from another angle.
FIG. 8 is an exploded schematic diagram showing some components of FIG. 6.
FIG. 9 is an enlarged schematic diagram showing the driving member and the abutting member in FIG. 8.
FIG. 10 is an enlarged schematic diagram of an area C in FIG. 8.
FIG. 11 is a perspective schematic view showing some components of the seat frame, which are not shown in FIG. 6.
FIG. 12 is an enlarged schematic diagram of an area D in FIG. 11.
FIG. 13 is a perspective schematic view showing the components of FIG. 11 from another angle.
FIG. 14 is an enlarged schematic diagram of an area E in FIG. 13.
FIG. 15 is a perspective schematic view showing the grip in FIG. 8.
FIG. 16 is a perspective schematic view showing the locking member in FIG. 8.
FIG. 17 is a perspective schematic view showing some components of the backrest, which are not shown in FIG. 6.
FIG. 18 is an enlarged schematic diagram of an area F in FIG. 17.
FIG. 19 is a perspective schematic view showing the components of FIG. 17 from another angle.
FIG. 20 is a perspective schematic view showing the assembly in FIG. 6 from another angle.
FIG. 21 is a schematic side view showing the normal state of the stroller in FIG. 1.
FIG. 22 is a schematic bottom view of the stroller in FIG. 21.
FIG. 23 is a schematic cross-sectional view of some elements of the stroller of FIG. 21.
FIG. 24 is a schematic top view showing the stroller of FIG. 21 when the backrest is deployed.
FIG. 25 is a schematic bottom view of the stroller in FIG. 24.
FIG. 26 is a perspective schematic view showing the stroller frame in FIG. 1.
FIG. 27 is an enlarged schematic diagram of an area G in FIG. 26.
FIG. 28 is an enlarged schematic diagram of an area H in FIG. 26.
FIG. 29 is an enlarged schematic diagram of an area I in FIG. 26.
FIG. 30 is an enlarged schematic diagram of an area J in FIG. 26.
FIG. 31 is an enlarged schematic diagram of an area K in FIG. 26.
FIG. 32 is a perspective schematic view of the stroller in FIG. 1 from another angle without showing the stroller frame.
FIG. 33 is a perspective schematic view showing the stroller frame of FIG. 26 during folding.
FIG. 34 is a perspective schematic view showing the stroller frame of FIG. 1 during folding.
FIG. 35 is a perspective schematic view of the stroller in FIG. 34 from another angle.
FIG. 36 is a perspective schematic view of the stroller in FIG. 34 from another angle.

### DETAILED DESCRIPTION OF THE INVENTION

The foregoing and other technical content, features, and effects of the present invention will be clearly presented in the following detailed description of the preferred embodiment with reference to the drawings. The terms indicating directions in the following embodiments, for example: up, down, left, right, front or back, etc., only refer to the directions in the accompanying drawings. Therefore, the terms indicating directions are used for illustration, not for limiting the present invention. Further, in the following embodiments, the same or similar elements will be denoted by the same or similar reference numerals.

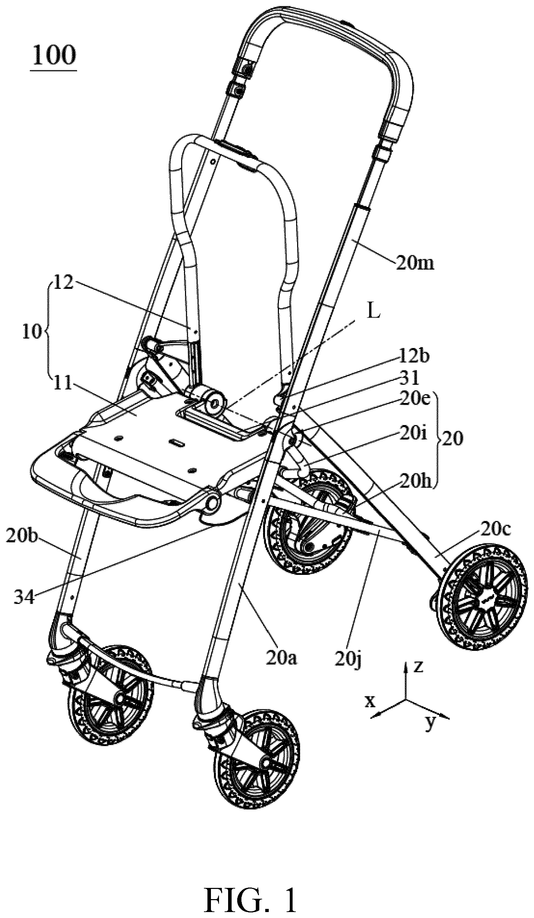

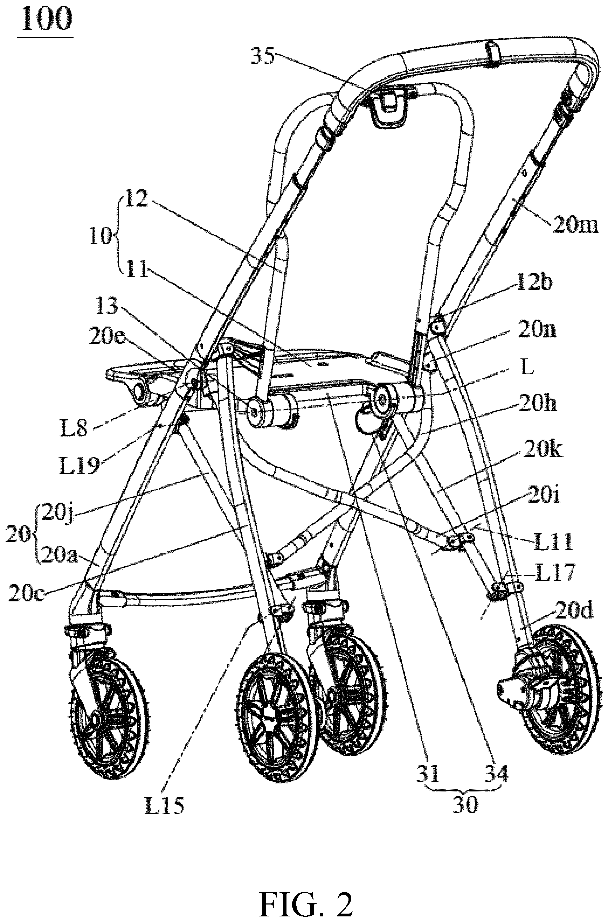

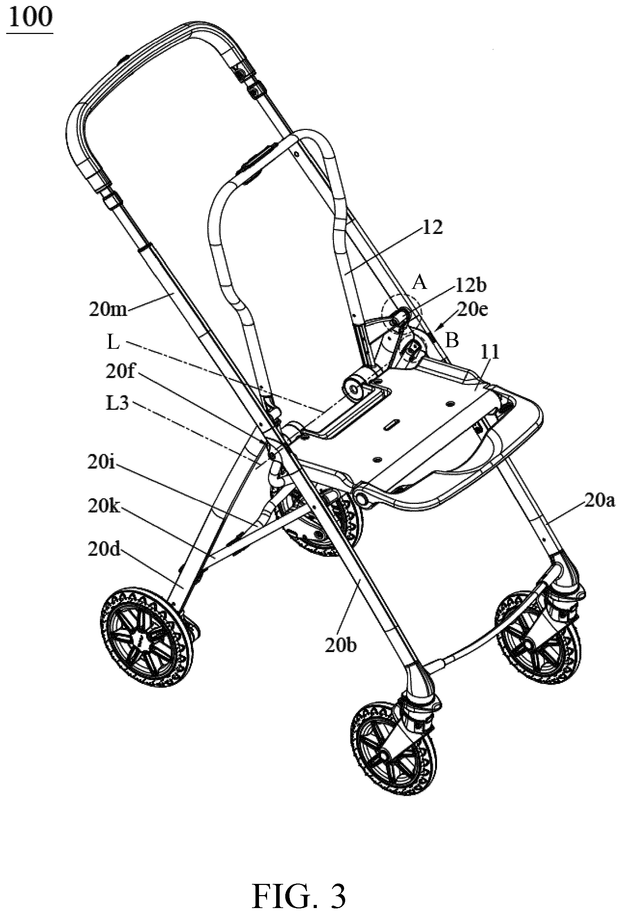

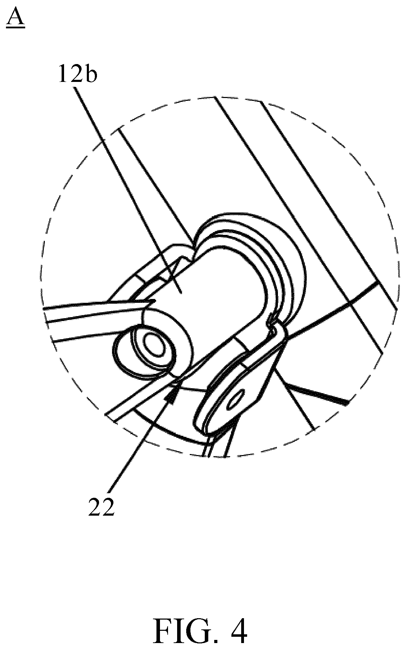

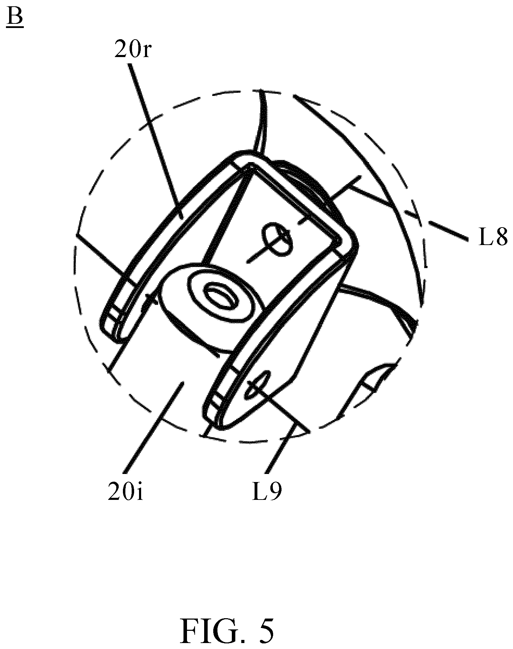

Please refer to FIG. 1 to FIG. 5. FIG. 1 is a perspective schematic view of an unfolded state of a stroller according to an embodiment of the present invention. FIG. 2 is a perspective schematic view of the stroller of FIG. 1 from another angle. FIG. 3 is a perspective schematic view of the stroller of FIG. 1 from another angle. FIG. 4 is an enlarged schematic diagram of an area A in FIG. 3. FIG. 5 is an enlarged schematic diagram of an area B in FIG. 3. In this embodiment, a stroller 100 includes a seat 10, a stroller frame 20 and a synchronous unlocking mechanism 30, wherein the seat 10 is used for an infant or a toddler to sit thereon and includes a seat frame 10, a backrest 12 and a shaft 13, the seat frame 11 and the backrest 12 are connected to each other through the shaft 13, the seat 10 is configured on the stroller frame 20, and the synchronous unlocking mechanism 30 is connected to the seat 10 and the stroller frame 20. Please note that the x-direction, y-direction, and z-direction in FIG. 1 respectively represent the front, left, and upper sides of the stroller frame 20, and will be used in the following descriptions.

In detail, the shaft 13 penetrates the left and right ends of the seat frame 11 and the backrest 12, such that the left end of the backrest 12 is pivotally connected to the left side of the seat frame 11, and the right end of the backrest 12 is pivotally connected to the right side of the seat frame 11, thereby increasing the connection strength when the seat frame 11 and the backrest 12 pivot to each other. On the other hand, the stroller frame 20 includes a left front leg 20a, a right front leg 20b, a left rear leg 20c, a right rear leg 20d, a left joint 20e, a right joint 20f and a handle 20m. The left and right ends of the handle 20m are pivotally connected to the left rear leg 20c and the right rear leg 20d, respectively, and are hinged with the left front leg 20a and the right front leg 20b through the left joint 20e and the right joint 20f, respectively. As shown in the figures, the pivotal connection of the handle 20m and the left rear leg 20c is disposed above the left joint 20e, and the pivotal connection of the handle 20m and the right rear leg 20d is disposed above the right joint 20f, so as to facilitate the pivoting of the handle 20m relative to the left front leg 20a, the right front leg 20b, the left rear leg 20c and the right rear leg 20d, which will be described in detail later. In addition, the stroller frame 20 has a substantially symmetrical structure, and thus only the components on one side of the stroller frame 20 will be described as a representative in the following descriptions.

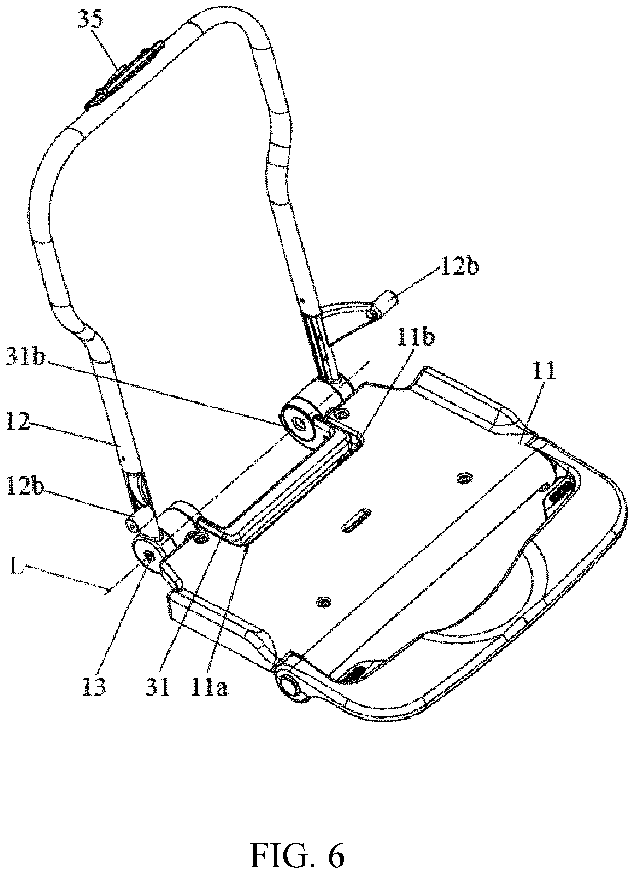

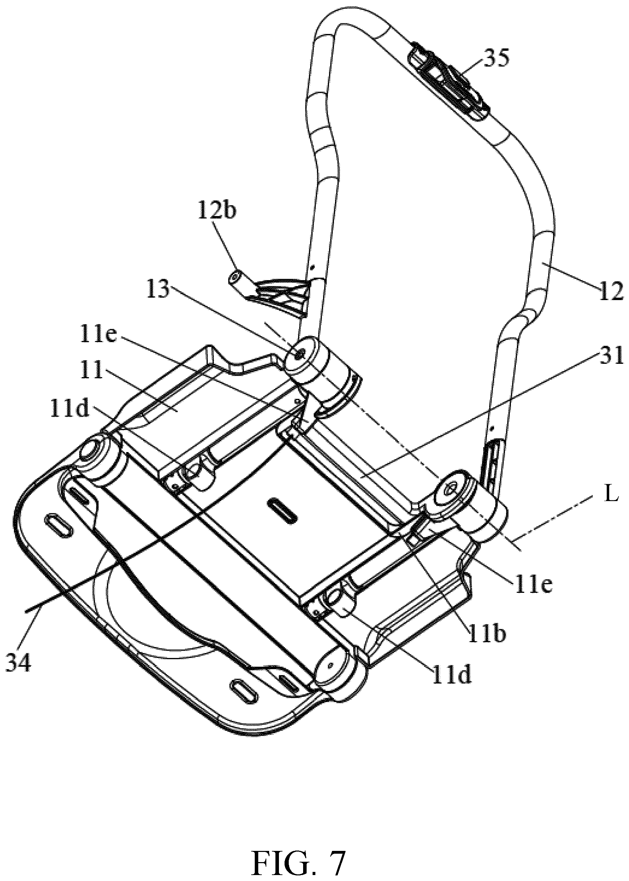

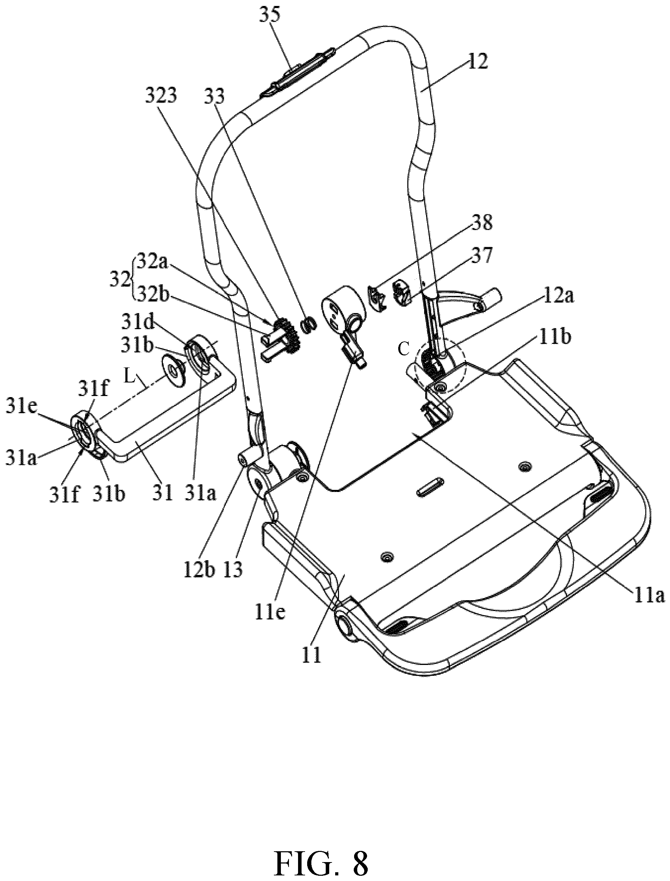

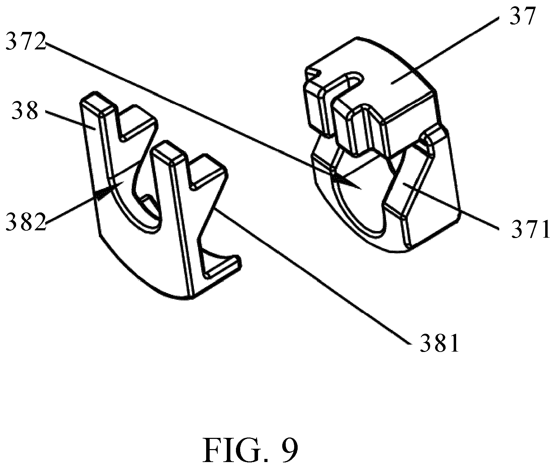

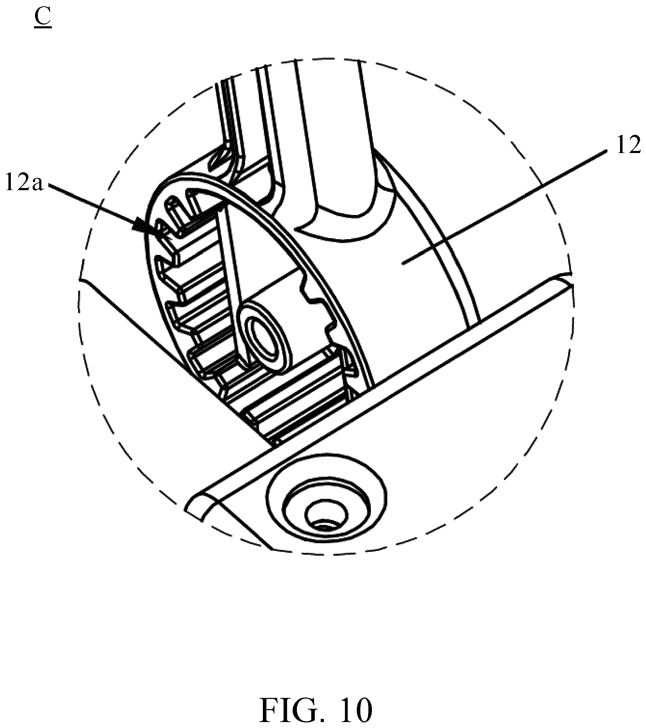

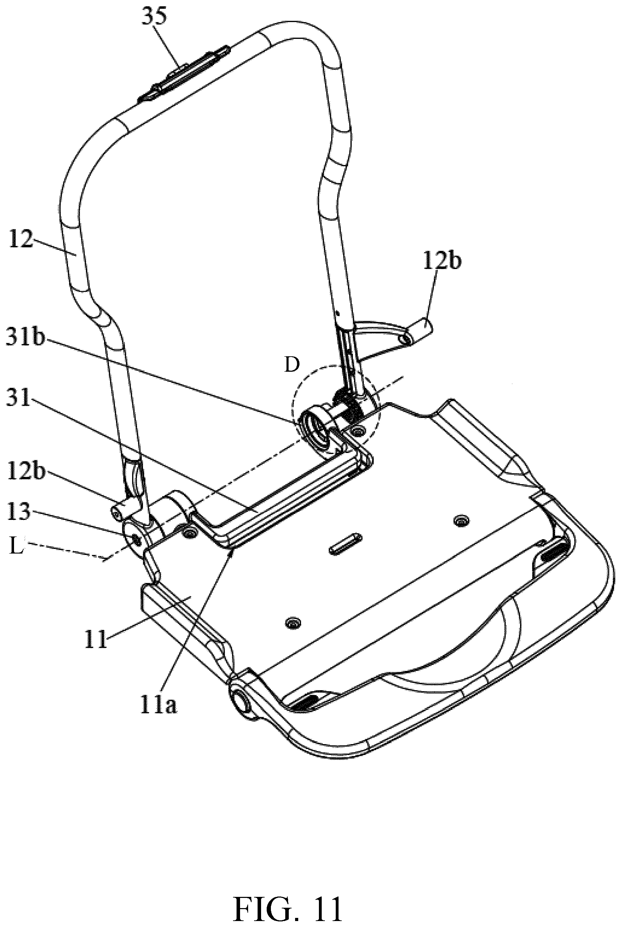

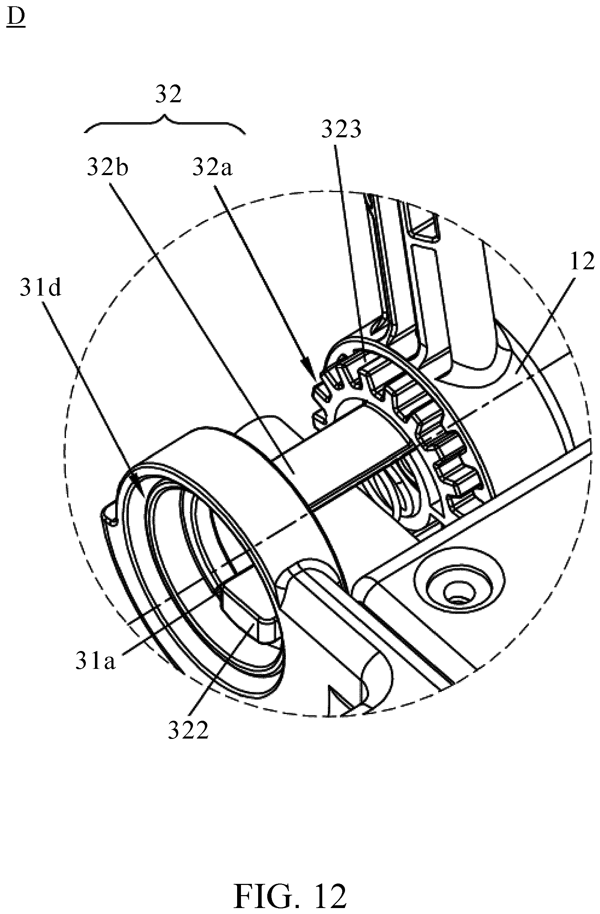

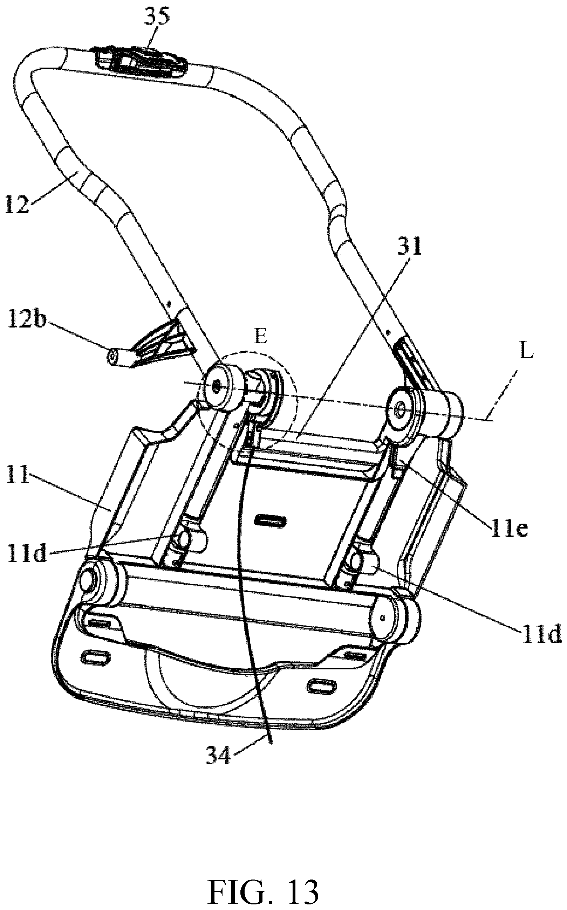

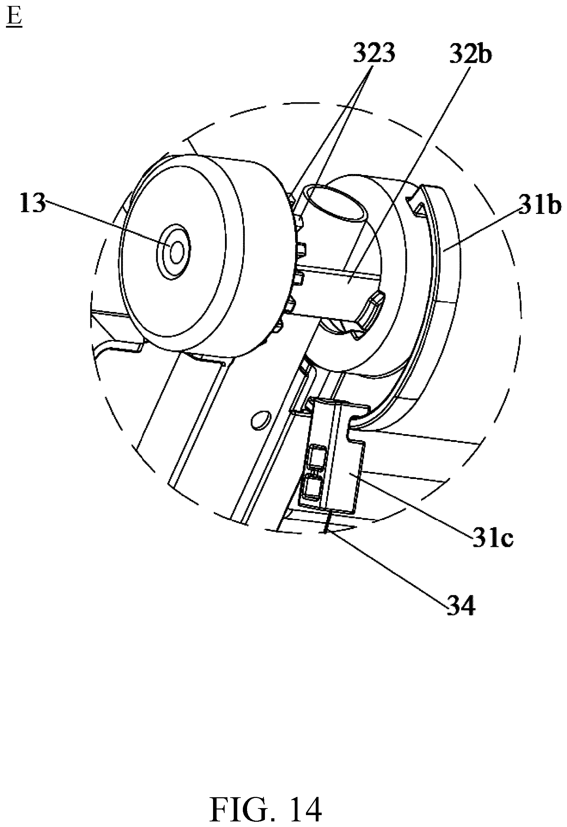

Please refer to FIG. 6 to FIG. 14. FIG. 6 is a perspective schematic view showing the assembly of the seat and the synchronous unlocking mechanism of FIG. 1. FIG. 7 is a perspective schematic view showing the assembly of FIG. 6 from another angle. FIG. 8 is an exploded schematic diagram showing some components of FIG. 6. FIG. 9 is an enlarged schematic diagram showing the driving member and the abutting member in FIG. 8. FIG. 10 is an enlarged schematic diagram of an area C in FIG. 8. FIG. 11 is a perspective schematic view showing some components of the seat frame, which are not shown in FIG. 6. FIG. 12 is an enlarged schematic diagram of an area D in FIG. 11. FIG. 13 is a perspective schematic view showing the components of FIG. 11 from another angle. FIG. 14 is an enlarged schematic diagram of an area E in FIG. 13. In the present embodiment, the synchronous unlocking mechanism 30 is used for synchronously unlocking the backrest 12 and the stroller frame 20, and includes a grip 31, a locking member 32, an elastic member 33 and a towing member 34. The grip 31 is pivotally connected to the seat frame 11 along an axis L, and the grip 31, the seat frame 11 and the backrest 12 are stacked in sequence. Preferably, the axis L is parallel to the left and right directions of the stroller frame 20. More preferably, the axis L passes through the shaft 13 and coincides with the axis of the shaft 13, so as to reduce the extra load caused by the eccentric rotation of the handle 31 , the seat frame 11 and the backrest 12 with each other. Certainly, according to actual needs, the grip 31 can also be pivotally connected to the backrest 12 and configured between the seat frame 11 and the backrest 12, or disposed at an outer side of the seat frame 11, which also achieves the purpose of pivoting the handle 31, the seat frame 11 and the backrest 12, and the present invention is not limited thereto.

On the other hand, the locking member 32 is sleeved on the shaft 13 and slidably disposed on the shaft 13, the seat frame 11 and the backrest 12 along the axial direction of the shaft 13. Therefore, the locking member 32 can slide between a locking position (as shown in FIGS. 11 to 14) and an unlocking position. When the locking member 32 is disposed at the locking position, the seat frame 11 and the backrest 12 are in the locking state and cannot pivot relatively to each other. When the locking member 32 is disposed at the unlocking position, the seat frame 11 and the backrest 12 can pivot relatively to each other. In addition, the locking member 32 is coupled to the grip 31, such that when the grip 31 rotates relatively to the axis L, the locking member 32 switches between the aforementioned locking position and the unlocking position.

In this embodiment, the elastic member 33 is, for example, a spring, and is configured between the locking member 32 and the seat frame 11, such that when the user does not operate the synchronous unlocking mechanism 30, the locking member 32 is pushed by the elastic member 33 and maintained in the locking position, so as to avoid an accidental folding of the stroller 100 during use. In other embodiment, the elastic member 33 can be configured between the locking member 32 and the backrest 12, and the locking member 32 can be pulled to the locking position by stretching tension, which is not limited in the present invention.

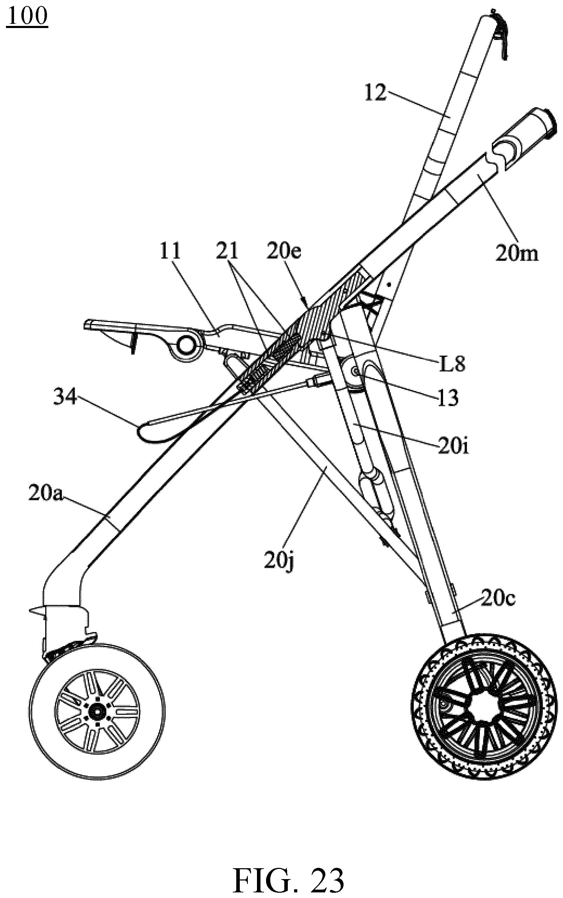

On the other hand, the stroller frame 20 further includes at least one fixing member 21 (referring to FIG. 23). In the present embodiment, there are two fixing members 21, which are respectively accommodated in the left front leg 20a and the right front leg 20b, and at least one part of the fixing members is configured in the left joint 20a and the right joint 20b for locking the stroller frame 20, such that the handle 20m cannot pivot relatively to the left front leg 20a and the right front leg 20b. In other embodiments, there is only one fixing member 21, which is configured at one side of the stroller frame 20, so as to lock the pivoting of the stroller frame 20. The towing member 34 is, for example, a cable, for being connected to the grip 31 and the fixing member 21. Therefore, when the user operates the grip 31 to pivot, the locking member 32 slides from the locking position to the unlocking position and release the locking state between the seat frame 11 and the backrest 12, and at the same time the grip 31 drives the fixing member 21 through the towing member 34 to unlock the stroller frame 20 synchronously, such that the handle 20m can pivot relatively to the left front leg 20a and the right front leg 20b, so as to achieve the effect of synchronous unlocking.

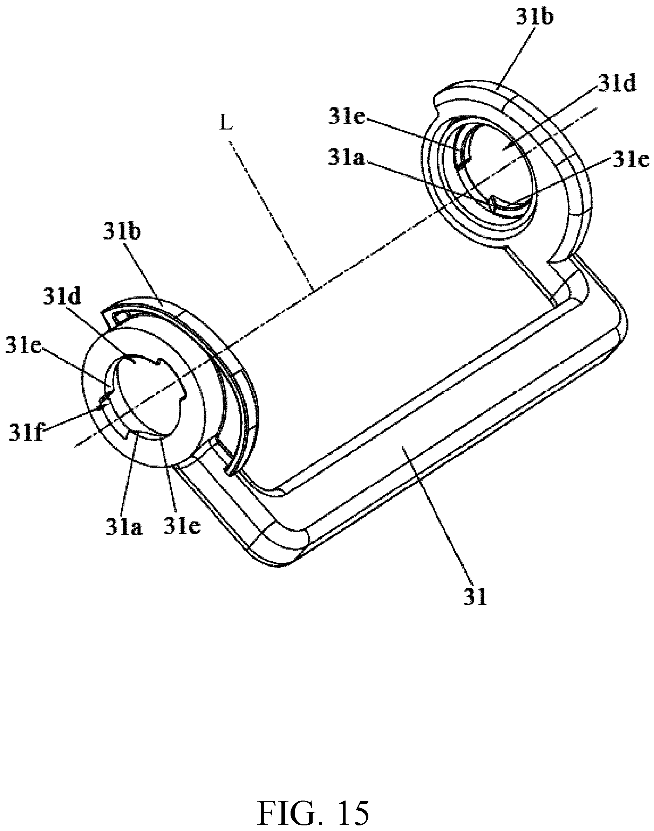

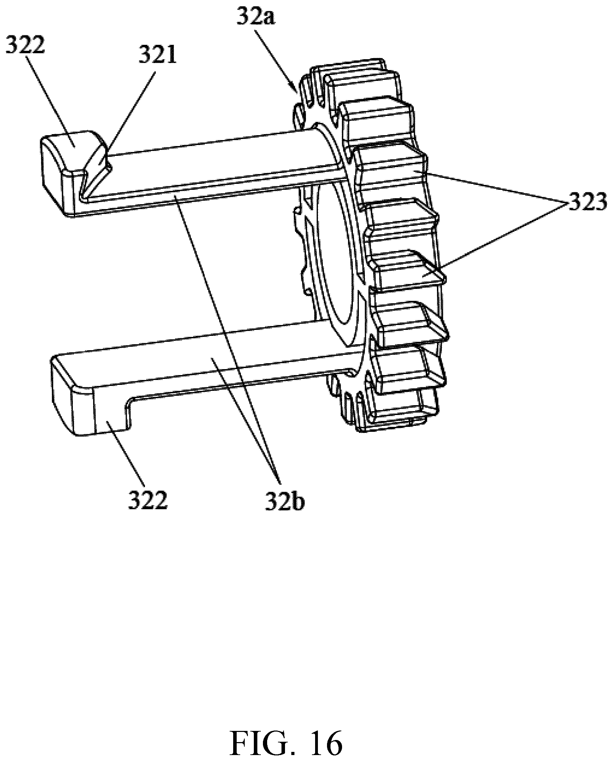

Specifically, please refer to FIG. 8, FIG. 10, FIG. 12 and FIGS. 14 to 16, in which FIG. 15 is a perspective schematic view showing the grip of FIG. 8, and FIG. 16 is a perspective schematic view showing the locking member of FIG. 8. As shown in FIG. 14 and FIG. 15, the grip 31 includes a guiding rail 31b and a slider 31c, wherein the guiding rail 31b is arc-shaped and takes the axis of the shaft 13 (that is, the axis L) as the axis, the distance between the guiding rail 31b and the shaft 13 and the axis L is in a gradational relationship, the slider 31c is slidably disposed on the guiding rail 31b, and one end of the towing member 34 is connected to the slider 31c. In other words, the towing member 34 is connected to the grip 31 through the slider 31c. With this configuration, when the user rotates the grip 31, the slider 31 c is blocked by the seat frame 11 and slides with respect to the guiding rail 31b, and since the distance between the guiding rail 31b and the shaft 13 is in a gradational relationship, the sliding block 31 c changes the relative distance with the fixing member 21 as if by the action of a cam, such that the towing member 34 drives the fixing member 21 and unlocks the stroller frame 20.

The following descriptions illustrate how the grip 31 drives the locking member 32 to slide from the locking position to the unlocking position. As shown in FIG. 15, the grip 31 is formed with a through hole 31d, and at least one abutting portion 31e is formed on the through hole 31d. For example, in the present embodiment, there are two abutting portions 31e, which are symmetrically arranged along the circumferential direction of the through hole 31d and protrude toward the inside of the through hole 31d, and each of the abutting portions 31e includes a driving surface 31a for driving the locking member 32. On the other hand, the locking member 32 includes a main body 32a and at least one extending arm 32b, in which the main body 32a is configured between the seat frame 11 and the backrest 12, and the extending arm 32b is connected to the main body 32a and penetrates the through hole 31d of the grip 31 and the seat frame 11 along the axial direction of the shaft 13. In addition, the extending arm 32b includes a driven surface 321, and the driving surface 31a and the driven surface 321 are inclined with respect to the axial direction and abut against each other. With this configuration, when the grip 31 pivots, the driving surface 31a pushes against the driven surface 321 along the circumference of the through hole 31d, and since the driving surface 31a and the driven surface 321 are both inclined with respect to the axial direction, the locking member 32 slides from the locking position to the unlocking position because the extending arm 32b moves toward the inner side of the grip 31 along the axial direction.

Furthermore, in order to reduce the bending moment of the single extending arm 32b in the circumferential direction of the through hole 3 Id, the number of extending arms 32b may be two, three or even more. These extending arms 32b are arranged symmetrically with respect to the main body 32a, but they can also be arranged asymmetrically. In order to avoid interference between the extending arms 32b, one end of each of the extending arms 32b is formed with a protrusion 322 thereon away from the main body 32a, and the driven surface 321 is configured on the protrusion 322. At the same time, the grip 31 is formed with concaved portions 31f between these abutting portions 31e, and these concaved portions 31f are recessed relatively to the abutting portions 31e in the circumferential direction of the through hole 31d and are used for the extending arm 32b to pass through. With this configuration, the torque of the grip 31 pushing the locking member 32 can be shared by the extending arms 32b, and the extending arms 32b do not interfere with each other, thereby reducing the volume occupied by the grip 31 and the locking member 32.

On the other hand, as shown in FIG. 10 and FIG. 12, the seat frame 11 and the backrest 12 respectively include a locking portion 12a, and the locking portion 12a and the main body 32a of the locking member 32 match each other. In the present embodiment, the main body 32a is an external gear, and the locking portion 12a is an internal gear structure, thereby limiting the rotation stroke between the locking member 32 and the seat frame 11 and the backrest 12 and preventing relative sliding in the circumferential direction. In addition, in order to facilitate the wiring of the towing member 34, as shown in FIG. 13, the seat frame 11 is formed with a wire-aligning portion 11e, wherein the wire-aligning portion 11e is, for example, a wire groove and is disposed on the outside of the guiding rail 31b with respect to the shaft 13, and the towing member 34 passes through the wire-aligning portion 11e. Preferably, the wire-aligning portion 11e is configured at the bottom side of the seat frame 11, so as to prevent the towing member 34 from protruding relatively to the upper surface of the seat 10 and affecting the riding experience.

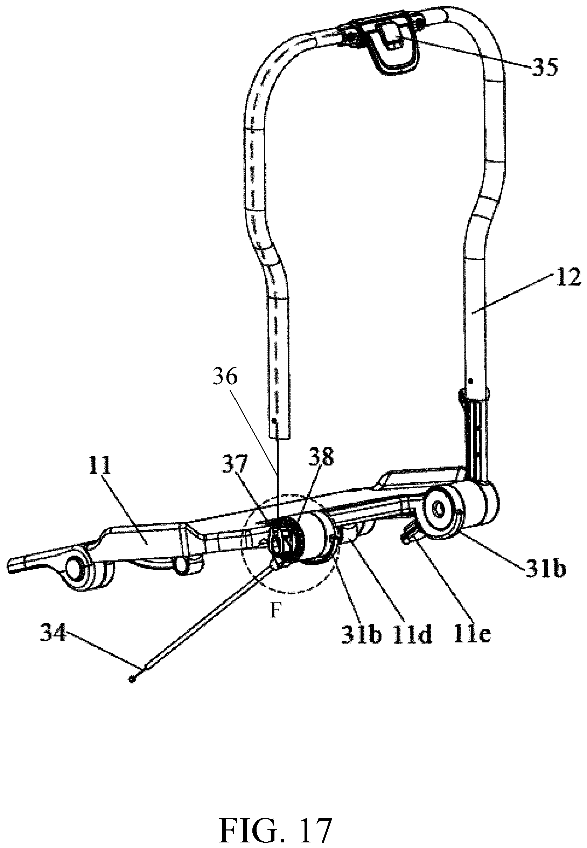

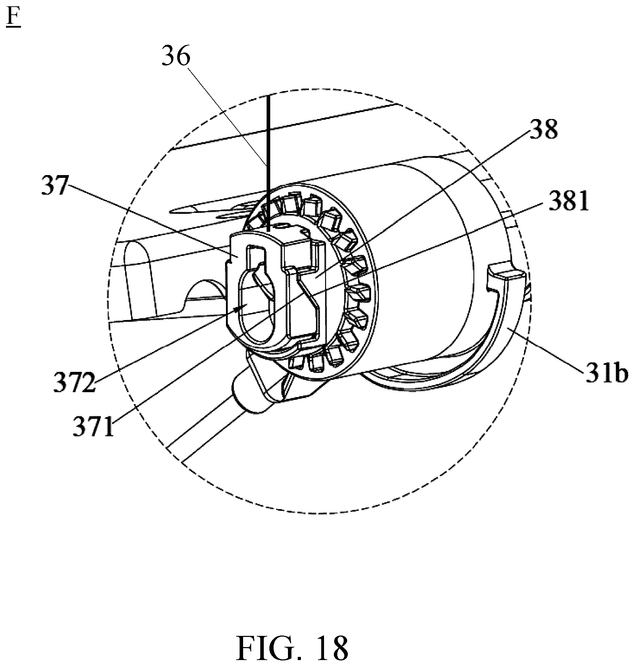

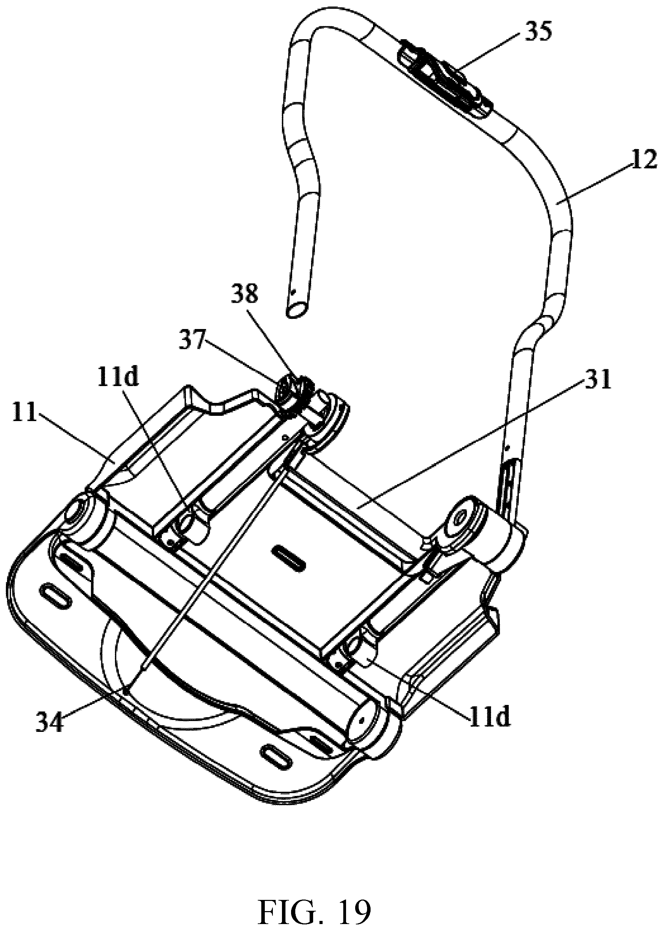

In addition to unlocking the seat frame 11 and the backrest 12 through the grip 31, the synchronous unlocking mechanism 30 of the present embodiment also has other ways for unlocking. Please refer to FIG. 8, FIG. 9 and FIGS. 17 to 19, wherein FIG. 17 is a perspective schematic view showing some components of the backrest, which are not shown in FIG. 6, FIG. 18 is an enlarged schematic diagram of an area F in FIG. 17, and FIG. 19 is a perspective schematic view showing the components of FIG. 17 from another angle. As shown in the figures, in the present embodiment, the synchronous unlocking mechanism 30 further comprises an operating member 35, a connecting member 36, a driving member 37 and an abutting member 38, wherein the operating member 35 is configured on the backrest 12, the driving member 37 and the abutting member 38 are slidably disposed on the backrest 12 along a radial direction of the shaft 13, and the connecting member 36 is connected to the operating member 35 and the driving member 37.

In detail, the operating member 35 is, for example, a button, which can be operated by the user to unlock the seat frame 11 and the backrest 12. The connecting member 36 is, for example, a cable, which passes through the inside of the backrest 12, and has one end connected to the operating member 35 and the other end connected to the driving member 37. As shown in FIG. 9 and FIG. 18, the driving member 37 and the abutting member 38 are configured at the outer side of the backrest 12, wherein the driving member 37 includes a driving surface 371, the abutting member 38 is adjacent to the main body 32a and includes a driven surface 381, and the driving surface 371 and the driven surface 381 are inclined with respect to the axial direction of the shaft 13 and abut against each other. Similar to the situation of the grip 31 and the locking member 32, when the user presses or flicks the operating member 35, the operating member 35 pulls the driving member 37 through the connecting member 36 to slide along the radial direction of the shaft 13, and the driving surface 371 and the driven surface 381 are inclined with respect to the axial direction of the shaft 13, so as to drive the abutting member 38 to move along the axial direction of the shaft 13 and push the main body 32a to move, such that the locking member 32 moves to the unlocking position from the locking position. In other words, when the user wants to unlock the seat frame 11 and the backrest 12 separately and maintain the deploy of the stroller frame 20, the locking member 32 can be unlocked through the operating member 35, which increases the flexibility of using the synchronous unlocking mechanism 30.

Furthermore, the driving member 37 is formed with a concaved portion 372, and the abutting member 38 is also formed with a concaved portion 382. Therefore, when the driving member 37 and the abutting member 38 are assembled on the backrest 12, the shaft 13 can pass through the inside of the concaved portion 372 and the concaved portion 382, thereby limiting the driving member 37 and the abutting member 38 to a limited extent.

Please refer to FIG. 6 to FIG. 8. As shown in the figures, the seat frame 11 is formed with a recess. Preferably, the recess 11a is configured at the back side of the seat frame 11, and at least one part of the grip 31 is accommodated in the recess 11a. Specifically, when the user does not operate the synchronous unlocking mechanism 30, the grip 31 can be rotated with respect to the axis L and is completely accommodated in the recess 11a, and since the recess 11a is configured at the back side of the backrest 11, it will not affect the infant or toddler who is sitting in the seat. Preferably, the seat frame 11 further includes a restricting portion 11b, wherein the restricting portion 11b is, for example, a block, and configured in the recess 11a. When the grip 31 is completely accommodated in the recess 11a, the restricting portion 11b can block the grip 31 to prevent the grip 31 from continuously rotating toward the bottom side of the seat frame 11. In other words, the restricting portion 11b selectively abuts against the grip 31, which makes it more convenient for the user to grab the grip 31.

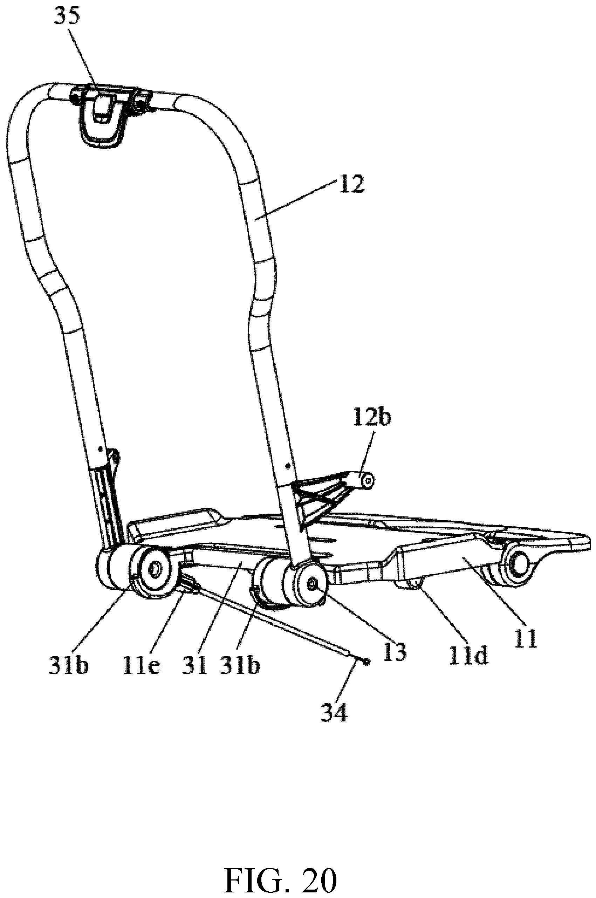

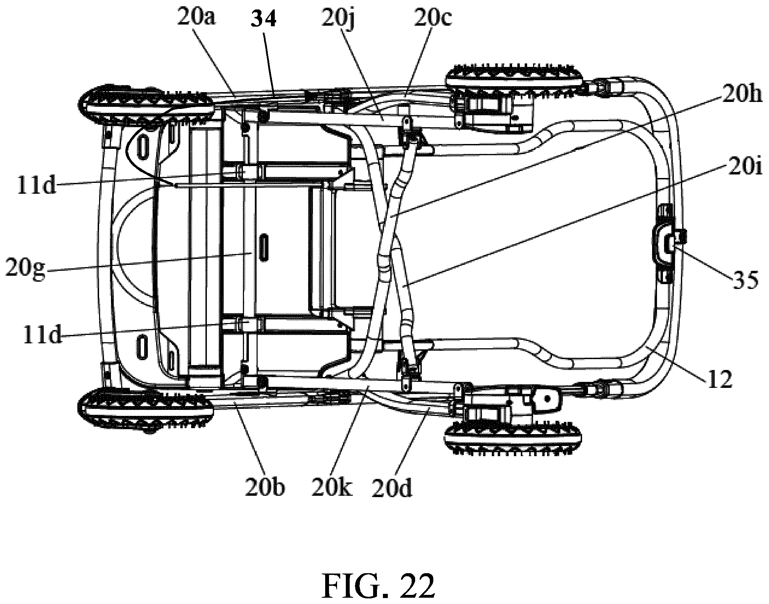

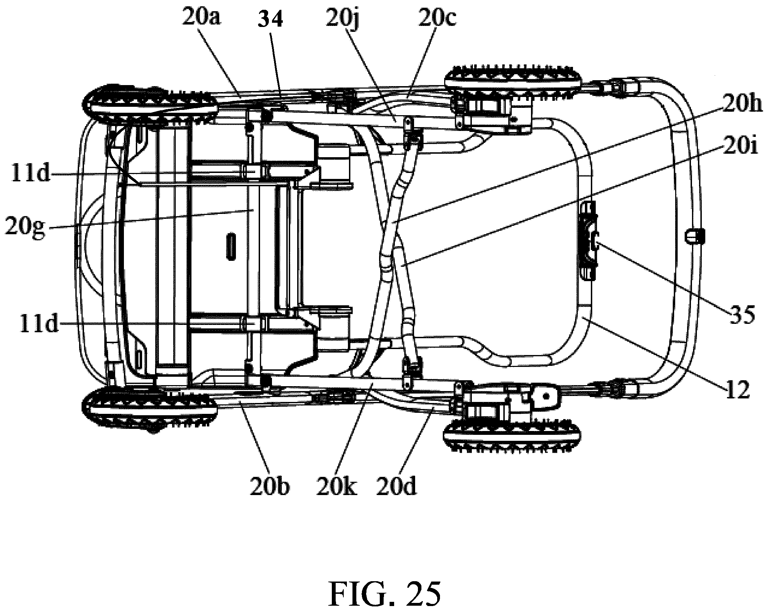

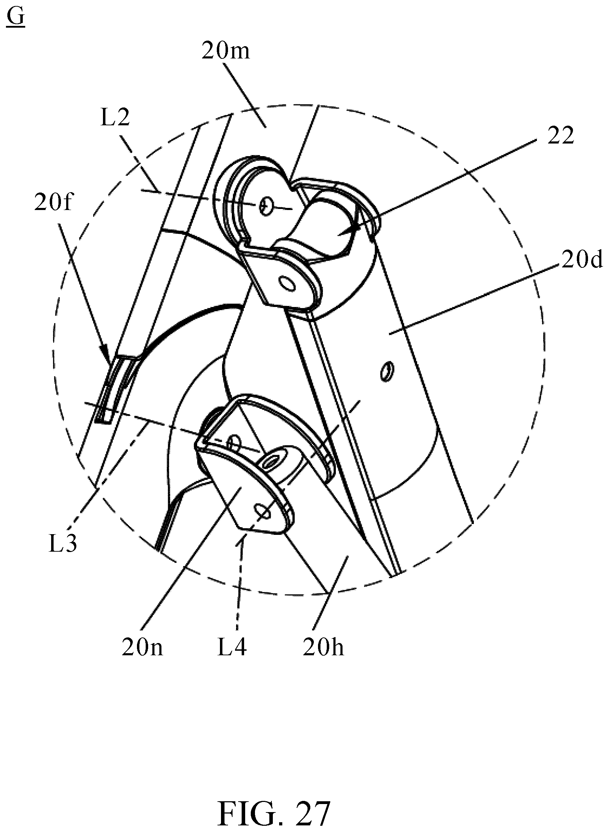

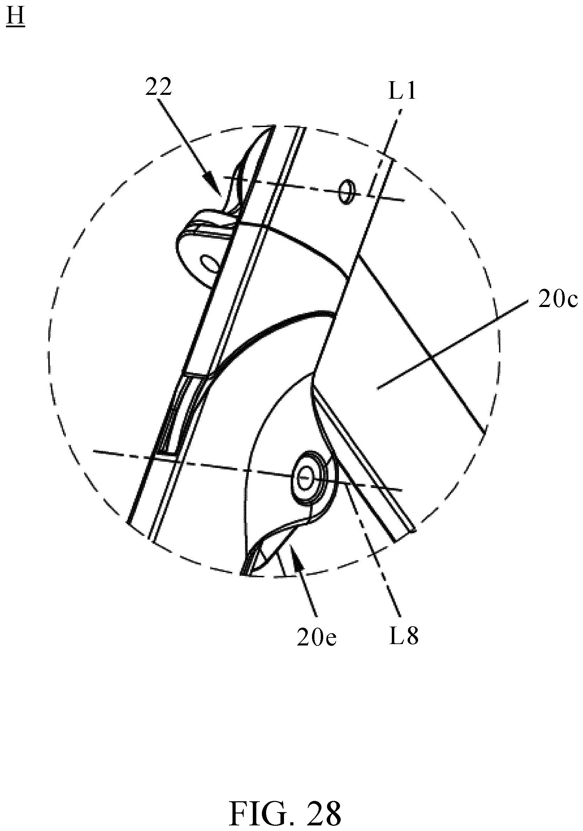

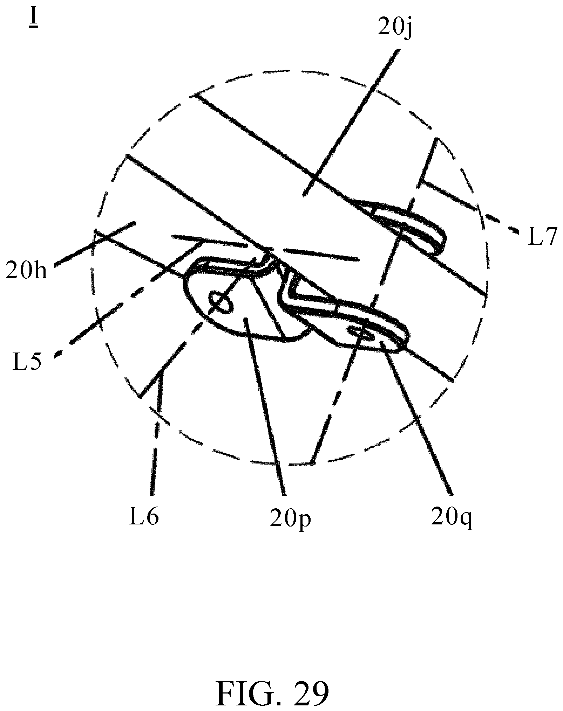

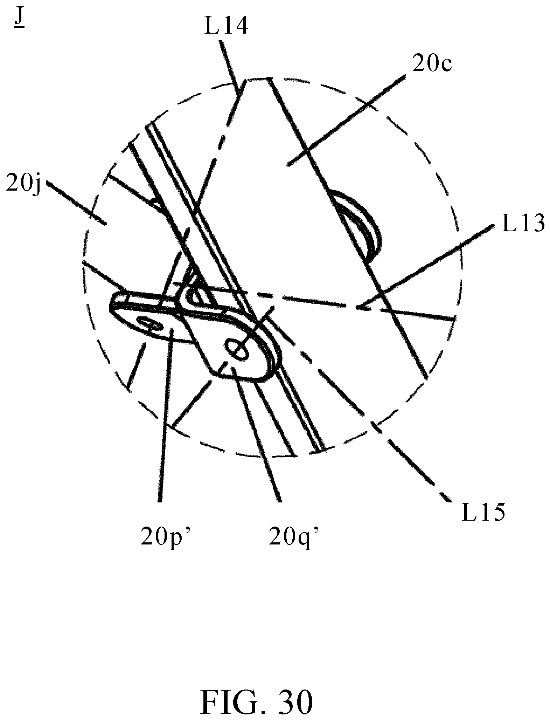

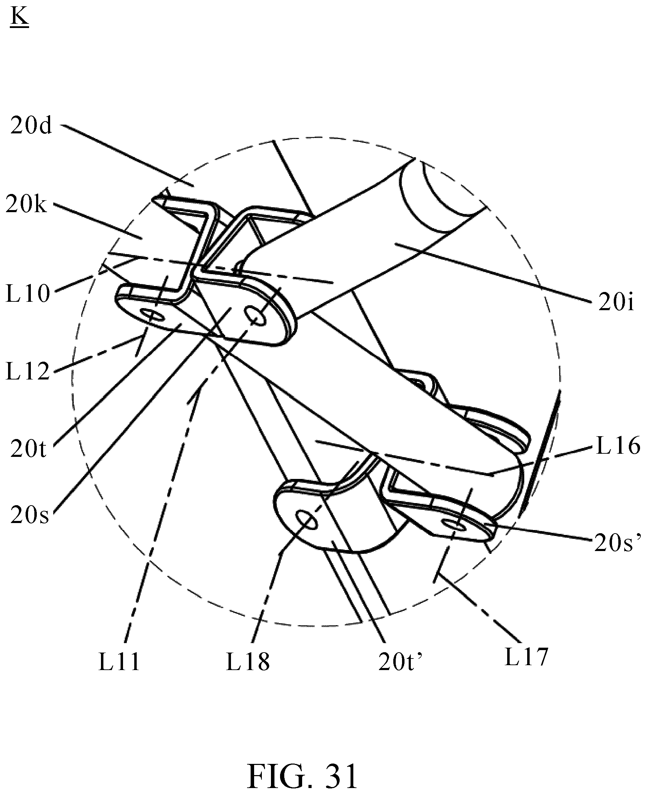

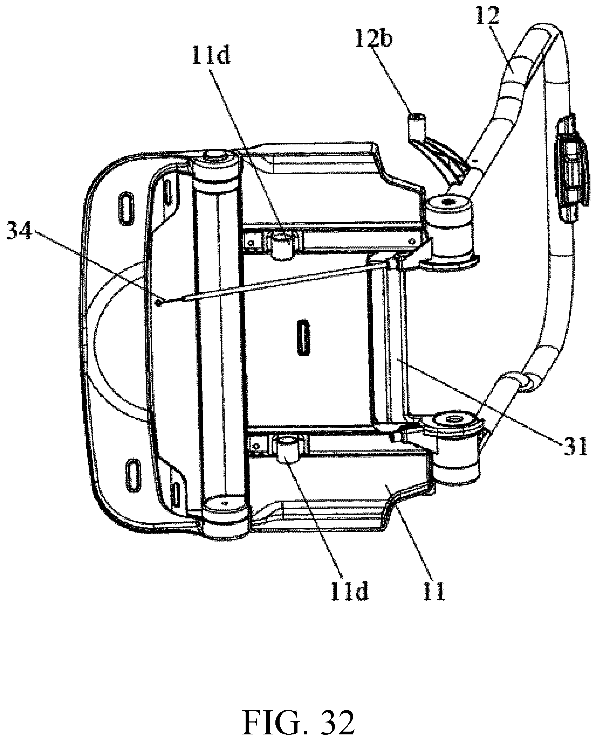

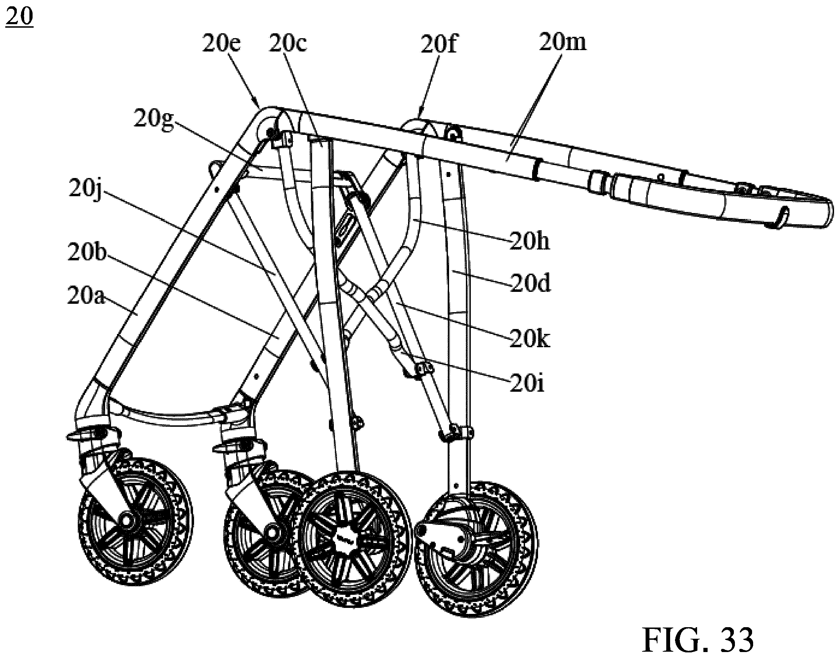

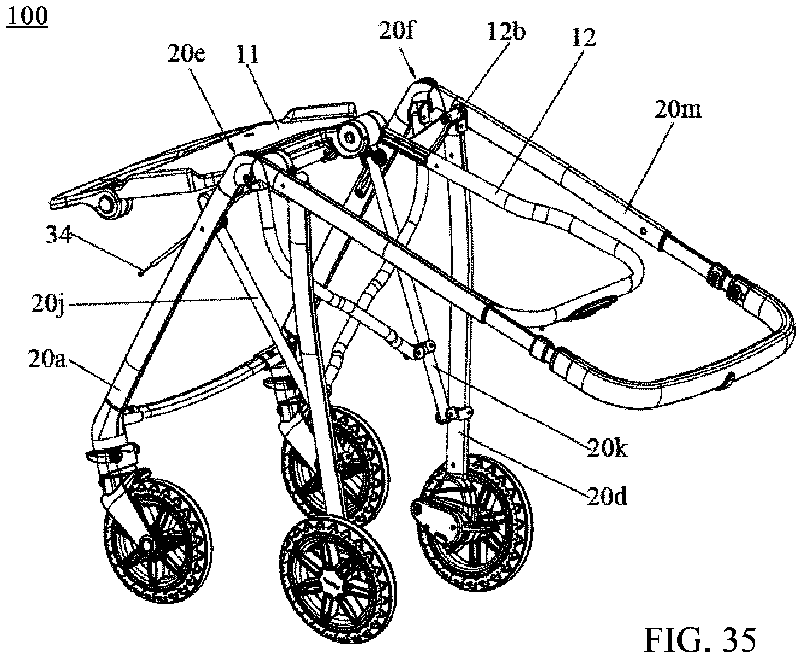

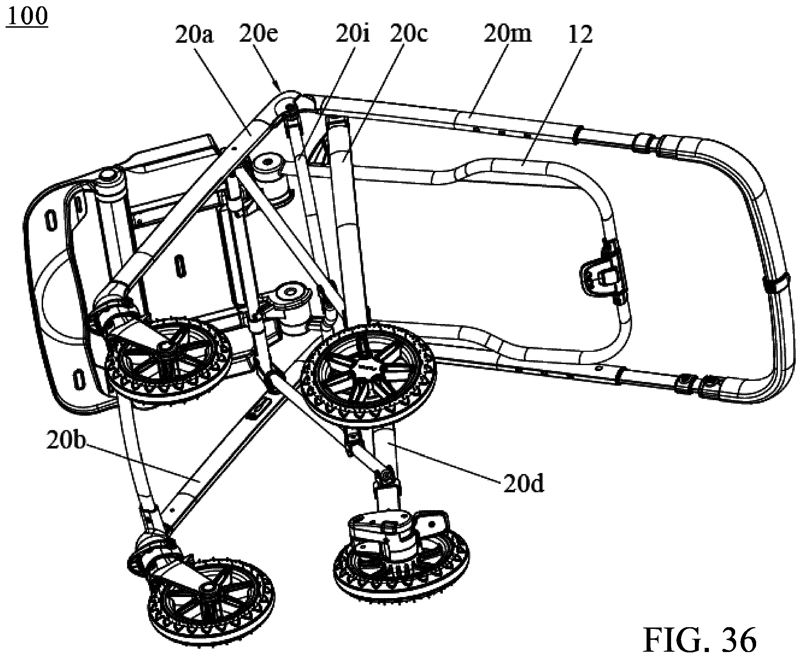

Please refer to FIG. 20 to FIG. 36. In addition to the above components, the stroller 100 of the present embodiment further includes a left link 20j and a right link 20k. Taking the left link 20j as an example, one end of the left link 20j is pivotally connected to the left front leg 20a, the other end of the left link 20j is pivotally connected to the left rear leg 20c, and the pivotal connection of the left front leg 20a and the left link 20j is disposed below the left joint 20e. In combination with the pivotal connection of the handle 20m and the left rear leg 20c being above the left joint 20e, when the user operates the synchronous unlocking mechanism 30 to unlock the fixing member 21, the handle 20m and the left front leg 20a are respectively disposed at different sides of the left joint 20e, and since the pivotal connection of the handle 20m and the left rear leg 20c is disposed above the left joint 20e, the handle 20m can be bent downward when the wheels of the left front leg 20a and the left rear leg 20c are in contact with the ground, that is, the center of gravity of the stroller frame 20 is lowered to ensure the stability of the stroller 100 when folded.

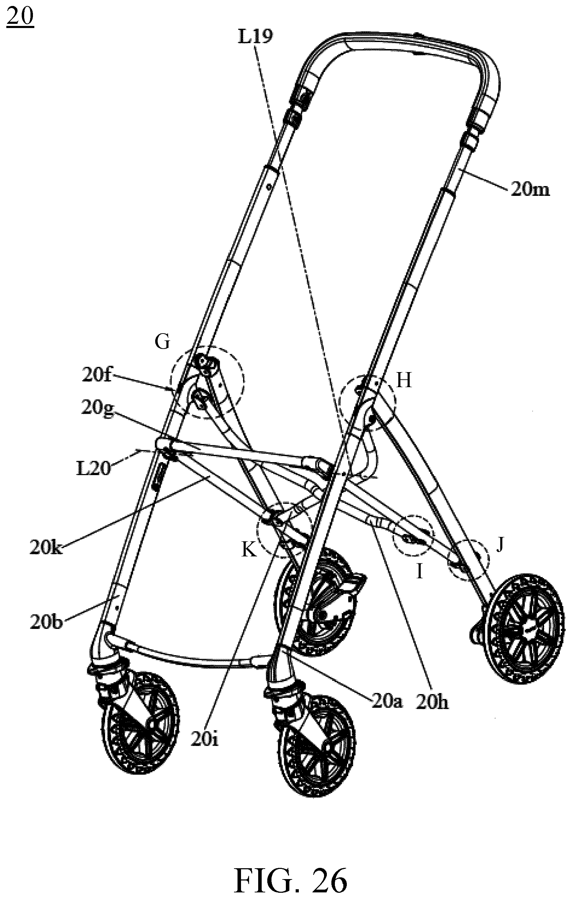

In detail, as shown in FIG. 26 to FIG. 31, the stroller frame 20 further includes a supporting member 20g, a first crossing member 20h and a second crossing member 20i, wherein the supporting member 20g is configured on the left link 20j and the right link 20k, and the seat frame 11 is slidably disposed on the supporting member 20g. Further, the seat frame further includes at least one sleeve l id, which is sleeved on the supporting member 20g. Therefore, when the user adjusts angle of the backrest 12 through the operating member 35, the seat frame 11 can slide in the front and rear directions with respect to the stroller frame 20, such that the center of gravity of the seat 10 is located on the back side of the seat frame 11 when the infant or toddler is seated, and the center of gravity of the seat 10 is moved to the front side of the seat frame 11 as the seat frame 11 and the backrest pivot forward when folded , which is able to prevent the seat 10 carrying the infant or toddler from turning over due to displacement of the center of gravity of the stroller 100.

In addition, the stroller frame further includes a first crossing member 20h and a second crossing member 20i. As shown in FIG. 5 and FIG. 26 to FIG. 31, one end of the first crossing member 20h is pivotally connected to the right joint 20f through a right pivoting bracket 20n, the other end of the first crossing member 20h is hinged with a second hinge joint 20q through a first hinge joint 20p, and the side of the second hinge joint 20q away from the first hinge joint 20p is pivotally connected to the left link 20j. Similarly, one end of the second crossing member 20i is pivotally connected to the left joint 20e through a left pivoting bracket 20r, the other end of the second crossing member 20i is hinged with a fourth hinge joint 20t through a third hinge joint 20s, and the side of the fourth hinge joint 20t away from the third hinge joint 20s is pivotally connected to the right link 20k. On the other hand, the left link 20j is pivotally connected to the left rear leg 20c through a first hinge joint 20p' and a second hinge joint 20q', and the right link 20k is pivotally connected to the right rear leg 20d through a third hinge joint 20s' and a fourth hinge joint 20t'. With this configuration, a pivoting centric line L1 between the left rear leg 20c and the handle 20m, a pivoting centric line L2 between the right rear leg 20d and the handle, a pivoting centric line L3 between the right pivoting bracket and the right joint 20f, a pivoting centric line L5 between the first hinge joint 20p and the second hinge joint 20q, a pivoting centric line L8 between the left pivoting bracket 20r and the left joint 20e, a pivoting centric line L10 between the third hinge joint 20s and the fourth hinge joint 20t, a pivoting centric line L13 between the first hinge joint 20p' and the second hinge joint 20q', a pivoting centric line L16 between the third hinge joint 20s' and the fourth hinge joint 20t', a pivoting centric line L19 between the left link 20j and the left front leg 20a and a pivoting centric line L20 between the right link 20k and the right front leg 20b all extend along the left and right directions of the stroller frame 20. The pivoting centric line L4 between the right pivoting bracket 20n and the first crossing member 20h intersects the pivoting centric line L3, the pivoting centric line L6 between the first hinge joint 20p and the first crossing member 20h intersects the pivoting centric line L5, the pivoting centric line L7 between the second hinge joint 20q and the left link 20j interests the pivoting centric line L5, the pivoting centric line L9 between the left pivoting bracket 20r and the second crossing member 20i intersects the pivoting centric line L8, the pivoting centric line L11 between the third hinge joint 20s and the second crossing member 20i intersects the pivoting centric line L10, the pivoting centric line L12 between the fourth hinge joint 20t and the right link 20k intersects the pivoting centric line L10, the pivoting centric line L14 between the first hinge joint 20p' and the left link 20j intersects the pivoting centric line L13, the pivoting centric line L15 between the second hinge joint 20q' and the left rear leg 20c intersects the pivoting centric line L13, the pivoting centric line L17 between the third hinge joint 20s' and the right link 20k intersects the pivoting centric line L16, and the pivoting centric line L18 between the fourth hinge joint 20t' and the right rear leg 20d intersects the pivoting centric line L16.

On the other hand, as shown in FIG. 4, FIG. 27 and FIG. 28, a stub 12b is formed on each of both sides of the backrest 12, a groove 22 is formed on each of upper ends of the left rear leg 20c and the right rear leg 20d, and the stubs 12b are configured in the grooves 22, respectively. Therefore, the seat 10 can be slidably and pivotally disposed on the supporting member 20g and the groove 22 though the seat frame 11 and the backrest 12, respectively, so as to increase the stability while the stroller is in use and increase the convenience of folding after unlocking.

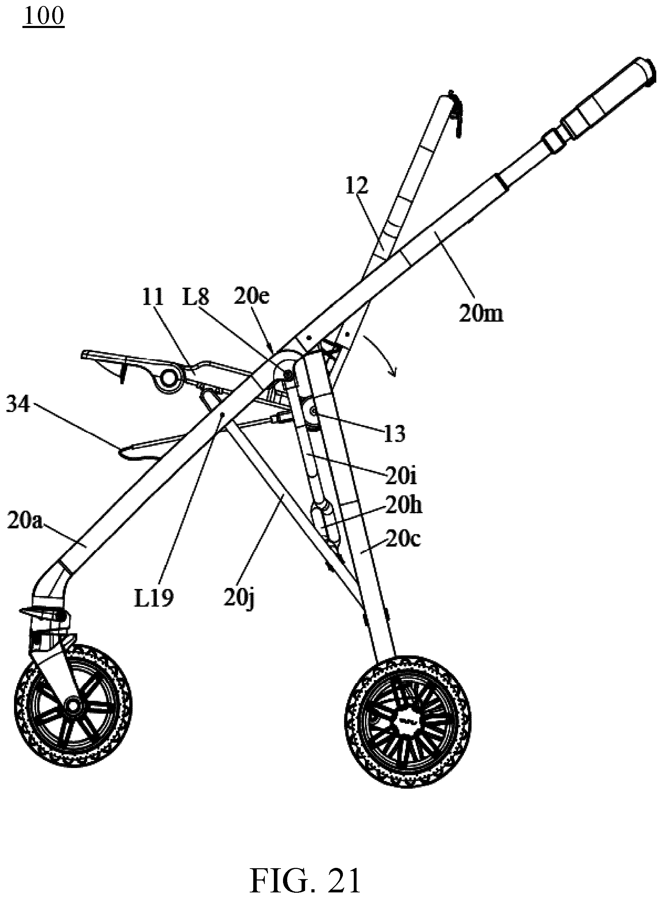

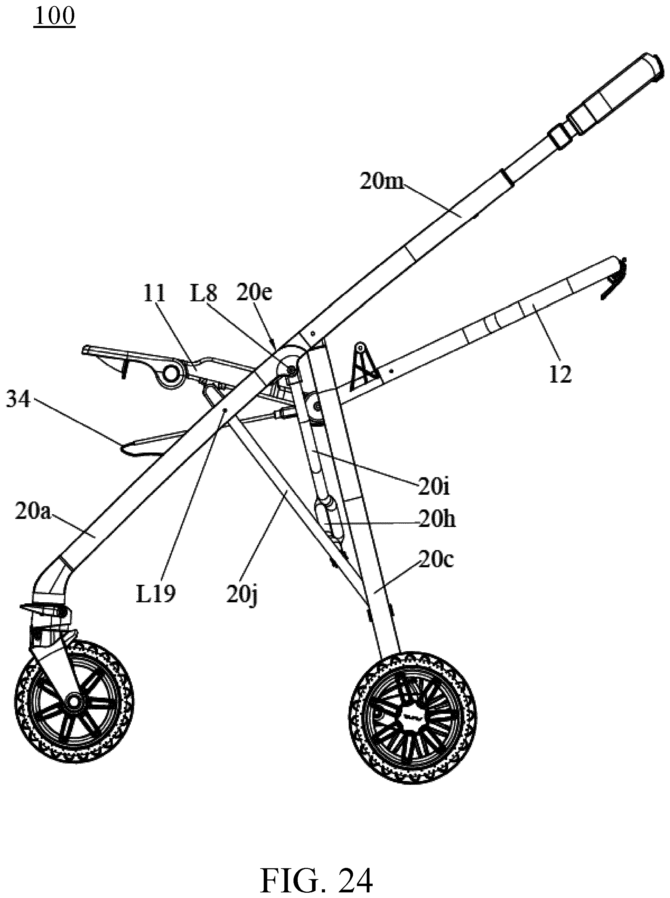

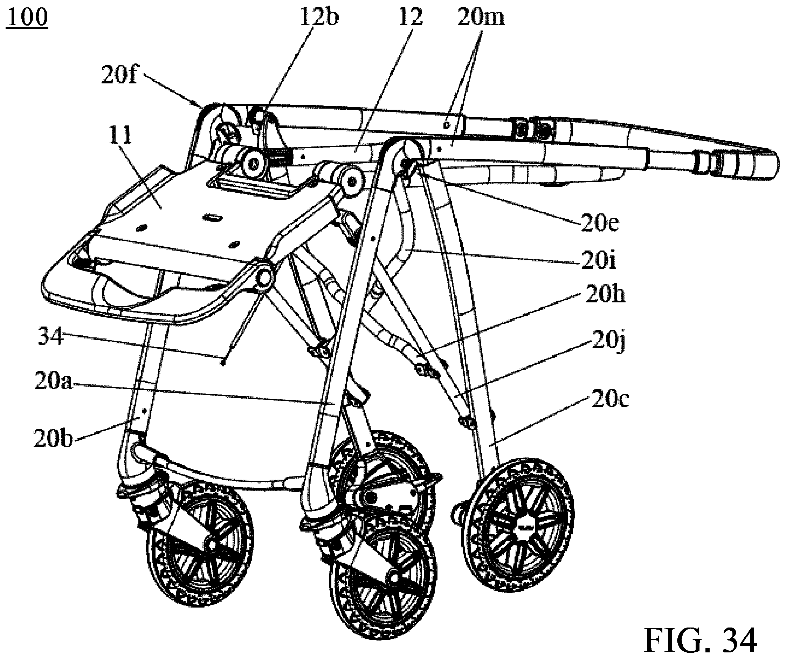

With reference to the accompanying drawings, the working principle of the stroller 100 of the present embodiment will be described: when the stroller 100 in the state shown in FIG. 21 or FIG. 23 is adjusted to the stroller 100 in the state shown in FIG. 24, the operator operates the operating member 35, and the operating member 35 drives the driving member 37 to slide outward along the radial direction of the shaft 13 through the connecting member 36, the cooperation of the driving surface 37 and the driven surface 381 drives the abutting member 38 to slide along the axial direction of the shaft 13, thereby pushing the locking member 32 out of the fitting relationship with the locking portion 12a of the backrest 12, and adjusting the angle of the backrest 12 with respect to the seat frame 11. At this time, the backrest 12 is adjusted along the direction indicated by the arrow next to the backrest 12 shown in FIG. 21, such that the backrest 12 pivots relatively to the seat frame 11 through the axis L to form the state shown in FIG. 24. In addition, during the pivoting of the backrest 12 with respect to the seat frame 11, the seat frame 11 is guided by the sliding sleeve l id, and due to the pivotal cooperation of the stub 12b and the groove 22, the seat 10 can slide forward and backward with respect to the stroller frame 20. When the stroller 100 needs to be folded, only the grip 31 needs to be lifted up. During the lifting process, the grip 31 drives the locking member 32 to slide from the locking position to the unlocking position through the cooperation of the driving surface 31a and the driven surface 321 of the locking member 32. At the same time, the grip 31 pulls the towing member 34 through the cooperation of the guiding rail 31b and the slider 31c, and drives the fixing member 21 to unlock, so as to realize the synchronous unlocking of the stroller frame 20 and the backrest 12. Finally, the handle 20m and the backrest 12 are rotated downward together, the seat frame 11 also slides along the front and rear directions of the stroller frame 20 and pivots with respect to the backrest 12, and the left rear leg 20c and the right rear leg 20d are respectively driven by the first crossing member 20h and the second crossing member 20i so as to move closer to the middle of the stroller frame 20, forming a state as shown in FIG. 34 to FIG. 36.

## Claims

1. A stroller (100) comprising,
a seat (10);
a stroller frame (20); and
a synchronous unlocking mechanism (30), configured on the seat (10) and the stroller frame (20), in which the seat (10) comprises a seat frame (11), a backrest (12) and a shaft (13), the seat frame (11) and the backrest (12) are pivotally connected through the shaft (13), and the stroller frame (20) comprises a fixing member (21) for selectively locking the stroller frame (20),
the synchronous unlocking mechanism (30) comprising:
a grip (31), pivotally connected to the seat frame (11) and/or the backrest (12);
a locking member (32), slidably disposed on the shaft (13), the seat frame (11) and
the backrest (12) along an axial direction of the shaft (13) and being coupled to the grip (31);
an elastic member (33), configured between the locking member (32) and the seat frame (11) or between the locking member (32) and the backrest (12); and
a towing member (34), connected to the grip (31) and the fixing member (21).

2. The stroller (100) of claim 1, wherein the locking member (32) comprises:
a main body (32a), configured between the seat frame (11) and the backrest (12); and
an extending arm (32b), connected to the main body (32a) and passing through the grip (31) and the seat frame (11) along the axial direction;
wherein the grip (31) is formed with a through hole (31d), at least one abutting portion (31e) is formed on the through hole (31d), the at least one abutting portion (31e) comprises a driving surface (31a), the extending arm (32b) comprises a driven surface (321), and the driving surface (31a) and the driven surface (321) are inclined with respect to the axial direction and abut against each other.

3. The stroller (100) of claim 2, the synchronous unlocking mechanism (30) comprising a plurality of the extending arms (32b), wherein the plurality of extending arms (32b) are symmetrically arranged with respect to the main body (32a), and a protrusion (322) is formed on one end of each of the plurality of extending arms (32b) away from the main body (32a).

4. The stroller (100) of any of claims 1-3, the synchronous unlocking mechanism (30) further comprising an operating member (35), a driving member (37), an abutting member (38) and a connecting member (36), wherein the operating member (35) is configured on the backrest (12), the driving member (37) and the abutting member (38) are slidably disposed on the backrest (12) along a radial direction of the shaft (13), and the connecting member (36) is connected to the operating member (35) and the driving member (37).

5. The stroller (100) of claim 4, wherein the driving member (37) comprises a driving surface (371), the abutting member (38) comprises a driven surface (381), and the driving surface (371) of the driving member (37) and the driven surface (381) of the abutting member (38) are inclined with respect to the axial direction and abut against each other.

6. The stroller (100) of any of claims 1-5, wherein the grip (31) comprises a guiding rail (31b) and a slider (31c), a distance between the guiding rail (31b) and the shaft (13) is in a gradational relationship, the slider (31c) is slidably disposed on the guiding rail (31b), and the towing member (34) is connected to the grip (31) through the slider (31c).

7. The stroller (100) of any of claims 1-6, wherein the seat (10) is configured on the stroller frame (20).

8. The stroller (100) of claim 7, wherein the stroller frame (20) further comprises a handle (20m), a joint (20e, 20f), a front leg (20a, 20b) and a rear leg (20c, 20d), in which one end of the handle (20m) is pivotally connected to the rear leg (20c ,20d) and is hanged with the front leg (20a, 20b) through the joint (20e, 20f), at least one part of the fixing member (21) is configured in the joint (20e, 20f), and a pivotal connection of the handle (20m) and the rear leg (20c, 20d) is located above the joint (20e, 20f).

9. The stroller (100) of claim 8, wherein the stroller frame (20) further comprises a link (20j, 20k), in which the link (20j, 20k) is pivotally connected to the front leg (20a, 20b) and the rear leg (20c, 20d), and a pivotal connection between the front leg (20a, 20b) and the link (20j, 20k) is located below the joint (20e, 20f).

10. The stroller (100) of claim 9, wherein the stroller frame (20) further comprises a supporting member (20g), in which the supporting member (20g) is configured on the link (20j, 20k), and the seat frame (11) is slidably disposed on the supporting member (20g).

11. The stroller (100) of any of claims 8-10, wherein the backrest (12) comprises a stud (12b), one end of the rear leg (20c, 20d) is formed with a groove (22) thereon, and the stub (12b) is configured in the groove (22).

12. The stroller (100) of any of claims 7-11, wherein the seat frame (11) is formed with a recess (11a), and at least one part of the grip (31) is accommodated in the recess (11a).

13. The stroller (100) of claim 12, wherein the seat frame (11) comprises a restricting portion (11b), and the restricting portion (11b) is configured in the recess (11a) and selectively abuts against the grip (31).

14. The stroller (100) of any of claims 7-13, wherein the seat frame (11) and the backrest (12) respectively comprise a locking portion (12a), and the locking portion (12a) and the locking member (32) match each other.

15. The stroller (100) of any of claims 7-14, wherein the seat frame (11) is formed with a wire-aligning portion (11e), the wire-aligning portion (11e) is configured at an outer side of the guiding rail (31b) with respect to the shaft (13), and the towing member (34) passes through the wire-aligning portion (11e).

## Patentansprüche

1. Kinderwagen (100), umfassend:
einen Sitz (10);
einen Kinderwagenrahmen (20); und
einen synchronen Entriegelungsmechanismus (30), der an dem Sitz (10) und dem Kinderwagenrahmen (20) eingerichtet ist, wobei der Sitz (10) einen Sitzrahmen (11), eine Rückenlehne (12) und einen Schaft (13) umfasst, der Sitzrahmen (11) und die Rückenlehne (12) durch den Schaft (13) schwenkbar verbunden sind und der Kinderwagenrahmen (20) ein Befestigungselement (21) zum selektiven Verriegeln des Kinderwagenrahmens (20) umfasst,
wobei der synchrone Entriegelungsmechanismus (30) umfasst:
einen Griff (31), der schwenkbar mit dem Sitzrahmen (11) und/oder der Rückenlehne (12) verbunden ist;
ein Verriegelungselement (32), das entlang einer axialen Richtung des Schafts (13) verschiebbar an dem Schaft (13), dem Sitzrahmen (11) und der Rückenlehne (12) angeordnet ist und mit dem Griff (31) gekoppelt ist;
ein elastisches Element (33), das zwischen dem Verriegelungselement (32) und dem Sitzrahmen (11) oder zwischen dem Verriegelungselement (32) und der Rückenlehne (12) eingerichtet ist; und
ein Zugelement (34), das mit dem Griff (31) und dem Befestigungselement (21) verbunden ist.

2. Kinderwagen (100) nach Anspruch 1, wobei das Verriegelungselement (32) umfasst:
einen Hauptkörper (32a), der zwischen dem Sitzrahmen (11) und der Rückenlehne (12) eingerichtet ist; und
einen sich erstreckenden Arm (32b), der mit dem Hauptkörper (32a) verbunden ist und entlang der axialen Richtung durch den Griff (31) und den Sitzrahmen (11) verläuft;
wobei der Griff (31) mit einem Durchgangsloch (31d) ausgebildet ist, mindestens ein Anlageabschnitt (31e) an dem Durchgangsloch (31d) ausgebildet ist, der mindestens eine Anlageabschnitt (31e) eine Antriebsfläche (31a) umfasst, der sich erstreckende Arm (32b) eine angetriebene Fläche (321) umfasst und die Antriebsfläche (31a) und die angetriebene Fläche (321) in Bezug auf die axiale Richtung geneigt sind und aneinander anliegen.

3. Kinderwagen (100) nach Anspruch 2, wobei der synchrone Entriegelungsmechanismus (30) mehrere der sich erstreckenden Arme (32b) umfasst, wobei die mehreren sich erstreckenden Arme (32b) in Bezug auf den Hauptkörper (32a) symmetrisch angeordnet sind und ein Vorsprung (322) an einem Ende jedes der mehreren sich erstreckenden Arme (32b) weg von dem Hauptkörper (32a) ausgebildet ist.

4. Kinderwagen (100) nach einem der Ansprüche 1-3, wobei der synchrone Entriegelungsmechanismus (30) ferner ein Betätigungselement (35), ein Antriebselement (37), ein Anlageelement (38) und ein Verbindungselement (36) umfasst, wobei das Betätigungselement (35) an der Rückenlehne (12) eingerichtet ist, das Antriebselement (37) und das Anlageelement (38) entlang einer radialen Richtung des Schafts (13) verschiebbar an der Rückenlehne (12) angeordnet sind und das Verbindungselement (36) mit dem Betätigungselement (35) und dem Antriebselement (37) verbunden ist.

5. Kinderwagen (100) nach Anspruch 4, wobei das Antriebselement (37) eine Antriebsfläche (371) umfasst, das Anlageelement (38) eine angetriebene Fläche (381) umfasst und die Antriebsfläche (371) des Antriebselements (37) und die angetriebene Fläche (381) des Anlageelements (38) in Bezug auf die axiale Richtung geneigt sind und aneinander anliegen.

6. Kinderwagen (100) nach einem der Ansprüche 1-5, wobei der Griff (31) eine Führungsschiene (31b) und einen Schieber (31c) umfasst, eine Entfernung zwischen der Führungsschiene (31b) und dem Schaft (13) in einer abgestuften Beziehung steht, der Schieber (31c) verschiebbar an der Führungsschiene (31b) angeordnet ist und das Zugelement (34) über den Schieber (31c) mit dem Griff (31) verbunden ist.

7. Kinderwagen (100) nach einem der Ansprüche 1-6, wobei der Sitz (10) an dem Kinderwagenrahmen (20) eingerichtet ist.

8. Kinderwagen (100) nach Anspruch 7, wobei der Kinderwagenrahmen (20) ferner einen Bügel (20m), ein Gelenk (20e, 20f), ein vorderes Bein (20a, 20b) und ein hinteres Bein (20c, 20d) umfasst, wobei ein Ende des Bügels (20m) schwenkbar mit dem hinteren Bein (20c, 20d) verbunden ist und mit dem vorderen Bein (20a, 20b) über das Gelenk (20e, 20f) aufgehängt ist, mindestens ein Teil des Befestigungselements (21) in dem Gelenk (20e, 20f) eingerichtet ist und eine Schwenkverbindung des Bügels (20m) und des hinteren Beins (20c, 20d) über dem Gelenk (20e, 20f) angeordnet ist.

9. Kinderwagen (100) nach Anspruch 8, wobei der Kinderwagenrahmen (20) ferner eine Verbindung (20j, 20k) umfasst, wobei die Verbindung (20j, 20k) schwenkbar mit dem vorderen Bein (20a, 20b) und dem hinteren Bein (20c, 20d) verbunden ist und eine Schwenkverbindung zwischen dem vorderen Bein (20a, 20b) und der Verbindung (20j, 20k) unter dem Gelenk (20e, 20f) angeordnet ist.

10. Kinderwagen (100) nach Anspruch 9, wobei der Kinderwagenrahmen (20) ferner ein Stützelement (20g) umfasst, wobei das Stützelement (20g) an der Verbindung (20j, 20k) eingerichtet ist und der Sitzrahmen (11) verschiebbar an dem Stützelement (20g) angeordnet ist.

11. Kinderwagen (100) nach einem der Ansprüche 8-10, wobei die Rückenlehne (12) einen Zapfen (12b) umfasst, ein Ende des hinteren Beins (20c, 20d) mit einer Nut (22) daran ausgebildet ist und der Zapfen (12b) in der Nut (22) eingerichtet ist.

12. Kinderwagen (100) nach einem der Ansprüche 7-11, wobei der Sitzrahmen (11) mit einer Aussparung (11a) ausgebildet ist und mindestens ein Teil des Griffs (31) in der Aussparung (11a) aufgenommen ist.

13. Kinderwagen (100) nach Anspruch 12, wobei der Sitzrahmen (11) einen Beschränkungsabschnitt (11b) umfasst und der Beschränkungsabschnitt (11b) in der Aussparung (11a) eingerichtet ist und selektiv an dem Griff (31) anliegt.

14. Kinderwagen (100) nach einem der Ansprüche 7-13, wobei der Sitzrahmen (11) und die Rückenlehne (12) jeweils einen Verriegelungsabschnitt (12a) umfassen und der Verriegelungsabschnitt (12a) und das Verriegelungselement (32) zueinander passen.

15. Kinderwagen (100) nach einem der Ansprüche 7-14, wobei der Sitzrahmen (11) mit einem Drahtausrichtungsabschnitt (11e) ausgebildet ist, der Drahtausrichtungsabschnitt (11e) in Bezug auf den Schaft (13) an einer Außenseite der Führungsschiene (31b) eingerichtet ist und das Zugelement (34) durch den Drahtausrichtungsabschnitt (11e) verläuft.

## Revendications

1. Poussette (100) comprenant
un siège (10) ;
un cadre de poussette (20) ; et
un mécanisme de déverrouillage synchrone (30), configuré sur le siège (10) et le cadre de poussette (20), dans laquelle le siège (10) comprend un cadre de siège (11), un dossier (12) et un axe (13), le cadre de siège (11) et le dossier (12) sont reliés de manière pivotante par le biais de l'arbre (13), et le cadre de poussette (20) comprend un élément de fixation (21) destiné à verrouiller sélectivement le cadre de poussette (20),
le mécanisme de déverrouillage synchrone (30) comprenant :
un élément de préhension (31), relié de manière pivotante au cadre de siège (11) et/ou au dossier (12) ;
un élément de verrouillage (32), disposé de manière coulissante sur l'arbre (13), le cadre de siège (11) et le dossier (12) le long d'une direction axiale de l'arbre (13) et étant couplé à l'élément de préhension (31) ;
un élément élastique (33), configuré entre l'élément de verrouillage (32) et le cadre de siège (11) ou entre l'élément de verrouillage (32) et le dossier (12) ; et
un élément de traction (34), relié à l'élément de préhension (31) et à l'élément de fixation (21).

2. Poussette (100) selon la revendication 1, dans laquelle l'élément de verrouillage (32) comprend :
un corps principal (32a), configuré entre le cadre de siège (11) et le dossier (12) ; et
un bras extensible (32b), relié au corps principal (32a) et qui passe à travers l'élément de préhension (31) et le cadre de siège (11) le long de la direction axiale ;
dans laquelle l'élément de préhension (31) est formé avec un orifice traversant (31d), au moins une partie de butée (31e) est formée sur l'orifice traversant (31d), l'au moins une partie de butée (31e) comprend une surface d'entraînement (31a), le bras extensible (32b) comprend une surface entraînée (321), et la surface d'entraînement (31a) et la surface entraînée (321) sont inclinées par rapport à la direction axiale et butent l'une contre l'autre.

3. Poussette (100) selon la revendication 2, le mécanisme de déverrouillage synchrone (30) comprenant une pluralité de bras extensibles (32b), dans laquelle les bras extensibles (32b) sont disposés symétriquement par rapport au corps principal (32a), et une saillie (322) est formée à une extrémité de chacun de la pluralité de bras extensibles (32b) à l'écart du corps principal (32a).

4. Poussette (100) selon l'une quelconque des revendications 1 à 3, le mécanisme de déverrouillage synchrone (30) comprenant en outre un élément d'actionnement (35), un élément d'entraînement (37), un élément de butée (38) et un élément de liaison (36), dans laquelle l'élément d'actionnement (35) est configuré sur le dossier (12), l'élément d'entraînement (37) et l'élément de butée (38) sont disposés de manière coulissante sur le dossier (12) le long d'une direction radiale de l'arbre (13), et l'élément de liaison (36) est relié à l'élément d'actionnement (35) et à l'élément d'entraînement (37).

5. Poussette (100) selon la revendication 4, dans laquelle l'élément d'entraînement (37) comprend une surface d'entraînement (371), l'élément de butée (38) comprend une surface entraînée (381), et la surface d'entraînement (371) de l'élément d'entraînement (37) et la surface entraînée (381) de l'élément de butée (38) sont inclinées par rapport à la direction axiale et butent l'une contre l'autre.

6. Poussette (100) selon l'une quelconque des revendications 1 à 5, dans laquelle l'élément de préhension (31) comprend un rail de guidage (31b) et une glissière (31c), une distance entre le rail de guidage (31b) et l'arbre (13) se trouve dans une relation graduelle, la glissière (31c) est disposée de manière coulissante sur le rail de guidage (31b), et l'élément de traction (34) est relié à l'élément de préhension (31) par le biais de la glissière (31c).

7. Poussette (100) selon l'une quelconque des revendications 1 à 6, dans laquelle le siège (10) est configuré sur le cadre de poussette (20).

8. Poussette (100) selon la revendication 7, dans laquelle le cadre de poussette (20) comprend en outre une poignée (20m), une jonction (20e, 20f), un pied avant (20a, 20b) et un pied arrière (20c, 20d), dans laquelle une extrémité de la poignée (20m) est reliée de manière pivotante au pied arrière (20c, 20d) et est suspendue au pied avant (20a, 20b) par le biais de la jonction (20e, 20f), au moins une partie de l'élément de fixation (21) est configurée dans la jonction (20e, 20f), et une liaison pivotante de la poignée (20m) et du pied arrière (20c, 20d) se trouve au-dessus de la jonction (20e, 20f).

9. Poussette (100) selon la revendication 8, dans laquelle le cadre de poussette (20) comprend en outre une liaison (20j, 20k), dans laquelle la liaison (20j, 20k) est reliée de manière pivotante au pied avant (20a, 20b) et au pied arrière (20c, 20d), et une liaison pivotante entre le pied avant (20a, 20b) et la liaison (20j, 20k) se trouve sous la jonction (20e, 20f).

10. Poussette (100) selon la revendication 9, dans laquelle le cadre de poussette (20) comprend en outre un élément de support (20g), dans laquelle l'élément de support (20g) est configuré sur la liaison (20j, 20k), et le cadre de siège (11) est disposé de manière coulissante sur l'élément de support (20g).

11. Poussette (100) selon l'une quelconque des revendications 8 à 10, dans laquelle le dossier (12) comprend un goujon (12b), une extrémité du pied arrière (20c, 20d) est formée avec une rainure (22) dessus, et le goujon (12b) est configuré dans la rainure (22).

12. Poussette (100) selon l'une quelconque des revendications 7 à 11, dans laquelle le cadre de siège (11) est formé avec un renfoncement (11a), et au moins une partie de l'élément de préhension (31) est contenue dans le renfoncement (11a).

13. Poussette (100) selon la revendication 12, dans laquelle le cadre de siège (11) comprend une partie de restriction (11b), et la partie de restriction (11b) est configurée dans le renfoncement (11a) et bute sélectivement contre l'élément de préhension (31).

14. Poussette (100) selon l'une quelconque des revendications 7 à 13, dans laquelle le cadre de siège (11) et le dossier (12) comprennent respectivement une partie de verrouillage (12a), et la partie de verrouillage (12a) et l'élément de verrouillage (32) correspondent l'un avec l'autre.

15. Poussette (100) selon l'une quelconque des revendications 7 à 14, dans laquelle le cadre de siège (11) est formé avec une partie d'alignement à câble (11e), la partie d'alignement à câble (11e) est configurée au niveau d'un côté externe du rail de guidage (31b) par rapport à l'arbre (13), et l'élément de traction (34) passe à travers la partie d'alignement à câble (11e).
